# EUROPEAN PATENT APPLICATION

(11) **EP 4 768 865 A1**
(43) Date of publication of application: **01.07.2026**
(21) Application number: 24858323.9
(22) Date of filing: 15.08.2024
(51) Int. Cl.: G01C 21/26

(54) **OFFLINE NAVIGATION METHOD AND APPARATUS FOR MOVING CARRIER, AND MOVING CARRIER**

(30) Priority: 25.08.2023 CN 202311087043
(71) Applicant: Yinwang Intelligent Technologies Co., Ltd., Shenzhen, Guangdong 518110 (CN)
(72) Inventor: SHI, Zijuan, Shenzhen, Guangdong 518129 (CN); ZHOU, Xiyu, Shenzhen, Guangdong 518129 (CN); XU, Ping, Shenzhen, Guangdong 518129 (CN); HU, Zhaojian, Shenzhen, Guangdong 518129 (CN)
(74) Representative: Körber, Martin Hans
(86) International application number: PCT/CN2024/112270
(87) International publication number: WO 2025/044780

(57) **Abstract**

This application provides an offline navigation method and apparatus for a mobile carrier, and the mobile carrier. The method includes: obtaining an offline map, where the offline map includes information about a location set; obtaining information about a location of interest to a user; adding the location of interest to the user to the location set when the location of interest to the user is not in the location set; obtaining a navigation instruction when the mobile carrier is in an offline state, where the navigation instruction includes at least partial content in text content corresponding to the location, or the navigation instruction includes at least partial information in speech information corresponding to the text content; and controlling, according to the navigation instruction, a display apparatus to display a search result by using the offline map, where the search result includes the location of interest to the user. Embodiments of this application may be applied to an intelligent vehicle or an electric vehicle, to help improve navigation experience of the user when the mobile carrier is in the offline state.

## Description

This application claims priority to Chinese Patent Application No. 202311087043.3, filed with the China National Intellectual Property Administration on August 25, 2023 and entitled "OFFLINE NAVIGATION METHOD AND APPARATUS FOR MOBILE CARRIER, AND MOBILE CARRIER", which is incorporated herein by reference in its entirety.

### TECHNICAL FIELD

This application relates to the field of navigation technologies, and more specifically, to an offline navigation method and apparatus for a mobile carrier, and a mobile carrier.

### BACKGROUND

When driving a vehicle, a user often encounters a scenario in which the vehicle is not connected to a network (or is offline). Because an entity data capability on which a navigation service of an in-vehicle map application depends is deployed on a cloud server, in some cases, the user cannot use the navigation service in the scenario in which the vehicle is not connected to a network. This affects navigation experience of the user.

### SUMMARY

This application provides an offline navigation method and apparatus for a mobile carrier, and the mobile carrier, to help improve navigation experience of a user when the mobile carrier is in an offline state.

According to a first aspect, an offline navigation method for a mobile carrier is provided. The method includes: obtaining an offline map, where the offline map includes information about a location set; obtaining a first location, where the first location is a location of interest to a user; adding the first location to the location set when the first location is not in the location set; obtaining a first navigation instruction when the mobile carrier is in an offline state, where the first navigation instruction includes at least partial content in text content corresponding to the first location, or the first navigation instruction includes at least partial information in speech information corresponding to the text content; and controlling, according to the first navigation instruction, a display apparatus to display a first search result by using the offline map, where the first search result includes the first location.

Based on the foregoing technical solution, when the location of interest to the user is not in the location set corresponding to the offline map, the location of interest to the user may be added to the location set. In this way, locations included in the location set corresponding to the offline map are expanded, so that when the mobile carrier is in the offline state, the user can obtain more locations through searching, and a search result can include the location of interest to the user. This helps improve navigation experience of the user.

In some possible implementations, the obtaining a first navigation instruction includes: obtaining a text input of the user in a text input box of the offline map, where the text input includes the at least partial content in the text content corresponding to the first location.

In some possible implementations, the obtaining a first navigation instruction includes: obtaining a speech navigation instruction of the user, where the speech navigation instruction includes the at least partial information in the speech information corresponding to the text content.

In some possible implementations, that the mobile carrier is in an offline state includes: The mobile carrier is located in a scenario that lacks wireless and global navigation satellite system (global navigation satellite system, GNSS) coverage, for example, an underground garage or a tunnel.

In some possible implementations, the adding the first location to the location set includes: adding attribute information such as a name, an address, coordinates, and a category of the first location to the location set.

With reference to the first aspect, in some implementations of the first aspect, the method further includes: establishing a first matching relationship between the first location and the at least partial content in the text content corresponding to the first location and/or the at least partial information in the speech information corresponding to the text content. The controlling, according to the first navigation instruction, a display apparatus to display a first search result by using the offline map includes: controlling, according to the first navigation instruction and based on the first matching relationship, the display apparatus to display the first search result by using the offline map, where the first search result includes the first location and a second location, and a priority of the first location is higher than a priority of the second location.

Based on the foregoing technical solution, when the user uses an offline navigation function, a vehicle may preferentially display, based on an input of the user and a previously established matching relationship, the location of interest to the user. This helps improve accuracy of speech recognition in the offline state and accuracy of offline location searching, and helps enhance navigation experience of the user in an offline scenario.

In some possible implementations, that the first location is a location of interest to a user may also be understood as that the first location is a location used by the user.

For example, the first location is a location that has been searched for by the user by using an application (application, app) when the mobile carrier is in an online state.

For another example, the first location is a location that has been successfully navigated by the user by using a map application when the mobile carrier is in the online state.

For another example, the first location is a location used by the user on a mobile terminal (for example, a mobile phone), and the first location is sent to the mobile carrier via the mobile terminal.

Based on the foregoing technical solution and personalized data of the user, the accuracy of speech recognition in the offline state and the accuracy of offline location searching can be improved, and the navigation experience of the user in the offline scenario can be enhanced. In addition, because the first location is preferentially displayed, it is convenient for the user to quickly select the first location from a plurality of locations in the search result. This helps improve driving safety of the user when the mobile carrier is in a driving state.

In some possible implementations, the location set includes a first subset and a second subset. In the location set initially obtained by the mobile carrier, the first subset may be an empty set, and the second subset may include a plurality of locations. The adding the first location to the location set includes: adding the first location to the first subset. The establishing a matching relationship between the first location and the at least partial content in the text content corresponding to the first location includes: establishing a preferential matching relationship between text content entered by the user and a location in the first subset.

The first subset may also be referred to as a most searched keyword set (or a POI data set on a mobile carrier side), and the second subset may also be referred to as a general point of interest (point of interest, POI) data set. After the mobile carrier obtains the offline map from a map server, data in the general POI data set may remain unchanged.

The preferential matching relationship between the text content entered by the user and the location in the first subset is established, so that a priority of matching between the text content entered by the user and a location in the most searched keyword set can be higher than a priority of matching between the text content entered by the user and a location in the general POI data set. In this way, it can be ensured that the location of interest to the user can be preferentially detected.

In some possible implementations, the establishing a matching relationship between the first location and the at least partial information in the speech information corresponding to the text content includes: optimizing a device-side speech recognition (automatic speech recognition, ASR) module by using the location in the most searched keyword set, so that when obtaining the at least partial information in the speech information corresponding to the text content, the mobile carrier may preferentially match the at least partial information with the text content corresponding to the first location.

Based on the foregoing embodiment and the personalized data of the user, it can be ensured that the location of interest to the user can be preferentially detected. This helps improve the accuracy of speech recognition in the offline state and the accuracy of offline location searching, and helps enhance the navigation experience of the user in the offline scenario.

The second location may be a location in the general POI data set, and the second location may be associated with the at least partial content or the at least partial information.

With reference to the first aspect, in some implementations of the first aspect, the information about the first location includes remark information of the first location, and the method further includes: establishing a second matching relationship between the first location and at least partial content in the remark information and/or at least partial information in speech information corresponding to the remark information; obtaining a second navigation instruction when the mobile carrier is in the offline state, where the second navigation instruction includes the at least partial content in the remark information, or the second navigation instruction includes the at least partial information in the speech information corresponding to the remark information; and controlling, according to the second navigation instruction and based on the second matching relationship, the display apparatus to display a second search result by using the offline map, where the second search result includes the first location and a third location, and the priority of the first location is higher than a priority of the third location.

Based on the foregoing technical solution, the mobile carrier may alternatively establish a matching relationship between the first location and text content or the speech information corresponding to the remark information. In this way, when the mobile carrier is in the offline state and it is detected that a navigation instruction sent by the user includes the text content or the speech information corresponding to the remark information, the first location may be preferentially matched for the user. This helps improve flexibility of searching for the first location by the user by using the offline map in the offline scenario, thereby helping improve the navigation experience of the user.

With reference to the first aspect, in some implementations of the first aspect, the obtaining information about a first location includes: obtaining the information about the first location when an input of searching for the first location by the user by using an application is detected.

Based on the foregoing technical solution, the locations included in the location set corresponding to the offline map may be expanded by using an input of searching for a location by the user in the application, so that when the mobile carrier is in the offline state, the user can obtain more location information through searching. This helps improve the navigation experience of the user.

In some possible implementations, the application includes a food application and a travel application.

With reference to the first aspect, in some implementations of the first aspect, the obtaining the information about the first location when that the user searches for the first location by using the application is detected includes: obtaining the information about the first location when an input of searching for the first location by the user by using a map application is detected.

With reference to the first aspect, in some implementations of the first aspect, the obtaining the information about the first location when an input of searching for the first location by the user by using a map application is detected includes: obtaining the information about the first location when an input of navigating to the first location by the user by using the map application is detected.

Based on the foregoing technical solution, the mobile carrier may obtain the information about the first location when detecting an input of searching for and navigating to the first location by the user in the map application. In this way, accuracy of determining the location of interest to the user can be improved by using the input of searching for and navigating to the first location in the map application.

With reference to the first aspect, in some implementations of the first aspect, the obtaining information about a first location includes: receiving the information about the first location sent by the mobile terminal.

Based on the foregoing technical solution, the locations included in the location set corresponding to the offline map may be expanded through location sharing between devices, so that when the mobile carrier is in the offline state, the user can obtain more location information through searching. This helps improve the navigation experience of the user.

In some possible implementations, a logged-in account on the mobile terminal is associated with a logged-in account on the mobile carrier.

For example, a logged-in account on the mobile terminal is the same as a logged-in account on the mobile carrier.

For another example, a logged-in account on the mobile terminal and a logged-in account on the mobile carrier are in a same family group.

For another example, a logged-in account on the mobile terminal is an account authorized by a logged-in account on the mobile carrier.

With reference to the first aspect, in some implementations of the first aspect, the method further includes: when stay duration of the mobile carrier in a first area is greater than or equal to preset duration, controlling a prompt apparatus to prompt the user to download the offline map, where the offline map includes a map of the first area.

Based on the foregoing technical solution, when a preset condition is met, the mobile carrier may prompt the user to download the offline map, to ensure that when the mobile carrier is in the offline state, the user can continue to use the offline map for location searching or use a navigation service of the offline map. This helps improve the navigation experience of the user.

With reference to the first aspect, in some implementations of the first aspect, before the controlling a prompt apparatus to prompt the user to download the offline map, the method further includes: determining that the mobile carrier is in a parked state.

Based on the foregoing technical solution, before the user is prompted to download the offline map, whether the mobile carrier is in the parked state may be first determined. This helps ensure driving safety when the user downloads the offline map.

According to a second aspect, a training method is provided. The method includes: obtaining information about a first location, where the first location is a location of interest to a user, and the location is not in a location set of an offline map; and training a speech interaction module on a vehicle side or an offline POI search module on the vehicle side based on text content corresponding to the first location and speech information corresponding to the first location.

With reference to the second aspect, in some implementations of the second aspect, the speech interaction module includes an ASR module, and the training a speech interaction module on a vehicle side based on text content corresponding to the first location and speech information corresponding to the first location includes: establishing, in the ASR module, a preferential matching relationship (or a preferential recognition relationship) between at least partial information in the speech information corresponding to the first location and at least partial content in the text content corresponding to the first location.

For example, the first location is in Chinese. The speech information corresponding to the first location may be speech information corresponding to a Chinese full name of the first location.

For example, the first location is in a foreign language (for example, English, Spanish, German, Japanese, Korean, or Portuguese). The speech information corresponding to the first location may be speech information corresponding to a foreign full name of the first location.

In a model inference phase, when obtaining a navigation instruction including the speech information corresponding to the first location, a vehicle in an offline state may input the navigation instruction into the trained ASR module, to obtain corresponding text content. The text content includes the text content corresponding to the first location. An intent (for example, the intent is "navigate to destination") and a slot (for example, the destination is "first location") of the user may be obtained through parsing by using a semantic understanding (natural language understanding, NLU) module. The speech interaction module on the vehicle side may send the intent and the slot to a map application on the vehicle side. The map application may determine, based on the intent, that the user expects to navigate to the destination, and perform searching on locations in the location set based on the slot by using the offline POI search module, to obtain the information (for example, attribute information such as a name, an address, coordinates, and a category) about the first location. The offline POI search module may send the information about the first location to an offline path planning module. The offline path planning module may plan one or more navigation paths based on a current position of the vehicle and a position of the first location. After the one or more navigation paths are obtained through planning, the vehicle may control a display apparatus to display the one or more navigation paths.

With reference to the second aspect, in some implementations of the second aspect, the training an offline POI search module on the vehicle side based on text content corresponding to the first location and speech information corresponding to the first location includes: establishing, in the POI search module on the vehicle side, a preferential matching relationship between the first location and at least a part of the text content corresponding to the first location.

For example, the first location is in Chinese. The text content corresponding to the first location may be a Chinese full name corresponding to the first location, or the text content corresponding to the first location may be a Chinese pinyin corresponding to the Chinese full name.

For example, the first location is in a foreign language. The text content corresponding to the first location may be a foreign full name.

According to a third aspect, an offline navigation apparatus for a mobile carrier is provided. The apparatus includes: an obtaining unit, configured to obtain an offline map, where the offline map includes information about a location set, the obtaining unit is further configured to obtain a first location, and the first location is a location of interest to a user; a data processing unit, configured to add the first location to the location set when the first location is not in the location set, where the obtaining unit is further configured to obtain a first navigation instruction when the mobile carrier is in an offline state, and the first navigation instruction includes at least partial content in text content corresponding to the first location, or the first navigation instruction includes at least partial information in speech information corresponding to the text content; and a control unit, configured to control, according to the first navigation instruction, a display apparatus to display a first search result by using the offline map, where the first search result includes the first location.

With reference to the third aspect, in some implementations of the third aspect, the apparatus further includes: a matching relationship establishment unit, configured to establish a first matching relationship between the first location and the at least partial content and/or the at least partial information; and the control unit, configured to control, according to the first navigation instruction and based on the first matching relationship, the display apparatus to display the first search result by using the offline map, where the first search result includes the first location and a second location, and a priority of the first location is higher than a priority of the second location.

With reference to the third aspect, in some implementations of the third aspect, the matching relationship establishment unit is further configured to establish a second matching relationship between the first location and at least partial content in remark information and/or at least partial information in speech information corresponding to the remark information; the obtaining unit is further configured to obtain a second navigation instruction when the mobile carrier is in the offline state, where the second navigation instruction includes the at least partial content in the remark information, or the second navigation instruction includes the at least partial information in the speech information corresponding to the remark information; and the control unit is further configured to control, according to the second navigation instruction and based on the second matching relationship, the display apparatus to display a second search result by using the offline map, where the second search result includes the first location and a third location, and the priority of the first location is higher than a priority of the third location.

With reference to the third aspect, in some implementations of the third aspect, the apparatus further includes a detection unit, and the obtaining unit is configured to obtain the information about the first location when the detection unit detects an input of searching for the first location by the user by using an application.

With reference to the third aspect, in some implementations of the third aspect, the obtaining unit is configured to obtain the information about the first location when the detection unit detects an input of searching for the first location by the user by using a map application.

With reference to the third aspect, in some implementations of the third aspect, the obtaining unit is configured to obtain the information about the first location when the detection unit detects an input of navigating to the first location by the user by using the map application.

With reference to the third aspect, in some implementations of the third aspect, the obtaining unit is configured to receive the information about the first location sent by a mobile terminal.

With reference to the third aspect, in some implementations of the third aspect, the control unit is further configured to: when stay duration of the mobile carrier in a first area is greater than or equal to preset duration, control a prompt apparatus to prompt the user to download the offline map, where the offline map includes a map of the first area.

With reference to the third aspect, in some implementations of the third aspect, the apparatus further includes a determining unit, configured to: before the control unit controls the prompt apparatus to prompt the user to download the offline map, determine that the mobile carrier is in a parked state.

According to a fourth aspect, a training apparatus is provided. The apparatus includes: an obtaining unit, configured to obtain information about a first location, where the first location is a location of interest to a user, and the location is not in a location set of an offline map; and a module training unit, configured to train a speech interaction module on a vehicle side or an offline POI search module on the vehicle side based on text content corresponding to the first location and speech information corresponding to the first location.

With reference to the fourth aspect, in some implementations of the fourth aspect, the speech interaction module includes an ASR module, and the module training unit is configured to establish, in the ASR module, a preferential matching relationship between at least partial information in the speech information corresponding to the first location and at least partial content in the text content corresponding to the first location.

With reference to the fourth aspect, in some implementations of the fourth aspect, the module training unit is configured to establish, in the offline POI search module on the vehicle side, a preferential matching relationship between the first location and at least a part of the text content corresponding to the first location.

According to a fifth aspect, an offline navigation apparatus for a mobile carrier is provided. The apparatus includes a processing unit and a storage unit. The storage unit is configured to store instructions, and the processing unit executes the instructions stored in the storage unit, so that the apparatus performs any possible method in the first aspect.

According to a sixth aspect, a training apparatus is provided. The apparatus includes a processing unit and a storage unit. The storage unit is configured to store instructions, and the processing unit executes the instructions stored in the storage unit, so that the apparatus performs any possible method in the second aspect.

According to a seventh aspect, a system is provided. The system includes a display apparatus and a computing platform. The computing platform includes any one of the possible apparatuses in the third aspect or the fifth aspect.

According to an eighth aspect, a mobile carrier is provided. The mobile carrier includes any possible apparatus in the third aspect, or includes the apparatus in the fourth aspect, or includes the apparatus in the fifth aspect, or includes the apparatus in the sixth aspect, or includes the system in the seventh aspect.

According to a ninth aspect, a computer program product is provided. The computer program product includes computer program code, and when the computer program code is run on a computer, the computer is enabled to perform any possible method in the first aspect or the second aspect.

It should be noted that all or a part of the computer program code may be stored in a first storage medium. The first storage medium may be packaged together with a processor, or may be packaged separately from a processor. This is not specifically limited in embodiments of this application.

According to a tenth aspect, a computer-readable medium is provided. The computer-readable medium stores program code. When the computer program code is run on a computer, the computer is enabled to perform any possible method in the first aspect or the second aspect.

According to an eleventh aspect, an embodiment of this application provides a chip system. The chip system includes a processor, configured to invoke a computer program or computer instructions stored in a memory, so that the processor performs any possible method in the first aspect or the second aspect.

With reference to the eleventh aspect, in a possible implementation, the processor is coupled to the memory through an interface.

With reference to the eleventh aspect, in a possible implementation, the chip system further includes the memory. The memory stores the computer program or computer instructions.

### BRIEF DESCRIPTION OF DRAWINGS

FIG. 1 is a functional block diagram of a mobile carrier according to an embodiment of this application;
FIG. 2(a)-1 to FIG. 2(c)-2 show a group of graphical user interfaces GUIs according to an embodiment of this application;
FIG. 3(a)-1 to FIG. 3(c)-2 show another group of GUIs according to an embodiment of this application;
FIG. 4(a) to FIG. 4(c)-2 show another group of GUIs according to an embodiment of this application;
FIG. 5 is a diagram of a system architecture according to an embodiment of this application;
FIG. 6 is a schematic flowchart of an offline navigation method for a mobile carrier according to an embodiment of this application;
FIG. 7 is another schematic flowchart of an offline navigation method for a mobile carrier according to an embodiment of this application; and
FIG. 8 is a block diagram of an offline navigation apparatus for a mobile carrier according to an embodiment of this application.

### DESCRIPTION OF EMBODIMENTS

The following describes the technical solutions in embodiments of this application with reference to the accompanying drawings in embodiments of this application. In descriptions of embodiments of this application, "/" means "or" unless otherwise specified. For example, A/B may represent A or B. In this specification, "and/or" describes only an association relationship between associated objects and represents that three relationships may exist. For example, A and/or B may represent the following three cases: Only A exists, both A and B exist, and only B exists. "At least one" means one or more. For example, "at least one of A and B ", similar to "A and/or B", describes an association relationship between associated objects and represents that three relationships may exist. For example, at least one of A and B may represent the following three cases: Only A exists, both A and B exist, and only B exists.

Prefix words "first", "second", and the like in embodiments of this application are merely intended to distinguish between different objects, and impose no limitation on positions, sequences, priorities, quantities, content, or the like of the described objects. Use of prefix words such as ordinal numbers used to distinguish the described objects in embodiments of this application does not constitute a limitation on the described objects. For descriptions of the described objects, refer to the context description in claims or embodiments, and the use of such prefix words should not constitute a redundant limitation. In addition, in the descriptions of embodiments, unless otherwise specified, "a plurality of" means two or more.

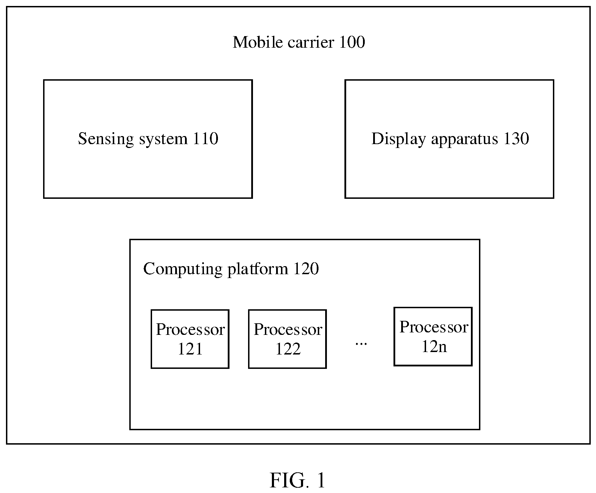

FIG. 1 is a functional block diagram of a mobile carrier 100 according to an embodiment of this application. The mobile carrier 100 may include a sensing system 110, a computing platform 120, and a display apparatus 130. The sensing system 110 may include one or more sensors that sense information about an environment around the mobile carrier 100. For example, the sensing system 110 may include a positioning system. The positioning system may be a global positioning system (global positioning system, GPS), a BeiDou system, or another positioning system. For another example, the sensing system 110 may include one or more of an inertial measurement unit (inertial measurement unit, IMU), a lidar, a millimeter-wave radar, an ultrasonic radar, and an image shooting apparatus.

A part of or all functions of the mobile carrier 100 may be controlled by the computing platform 120. The computing platform 120 may include one or more processors, for example, processors 121 to 12n (where n is a positive integer). The processor is a circuit having a signal processing capability. In an implementation, the processor may be a circuit having an instruction reading and running capability, for example, a central processing unit (central processing unit, CPU), a microprocessor, a graphics processing unit (graphics processing unit, GPU) (which may be understood as a microprocessor), or a digital signal processor (digital signal processor, DSP). In another implementation, the processor may implement a specific function based on a logical relationship of a hardware circuit. The logical relationship of the hardware circuit is fixed or reconfigurable. For example, the processor is a hardware circuit implemented by an application-specific integrated circuit (application-specific integrated circuit, ASIC) or a programmable logic device (programmable logic device, PLD), for example, a field programmable gate array (field programmable gate array, FPGA). In a reconfigurable hardware circuit, a process in which the processor loads a configuration document to implement hardware circuit configuration may be understood as a process in which the processor loads instructions to implement functions of a part or all of the units. In addition, the processor may alternatively be a hardware circuit designed for artificial intelligence, and may be understood as an ASIC, for example, a neural network processing unit (neural network processing unit, NPU), a tensor processing unit (tensor processing unit, TPU), or a deep learning processing unit (deep learning processing unit, DPU). In addition, the computing platform 120 may further include a memory. The memory is configured to store instructions, and a part or all of the processors 121 to 12n may invoke the instructions in the memory, to implement a corresponding function.

The display apparatus 130 in a cabin is mainly classified into two types: a first type is a vehicle-mounted display, and a second type is a projection display, for example, a head-up display (head-up display, HUD) apparatus. The vehicle-mounted display is a physical display, and is an important part of an in-vehicle infotainment system. A plurality of displays may be disposed in the cabin, for example, a digital dashboard display, a central display, a display in front of a passenger in a front passenger seat (also referred to as a front-row passenger), a display in front of a rear-seat passenger on the left, and a display in front of a rear-seat passenger on the right. Even a window may be used as a display for displaying. Head-up display, also referred to as a head-up display system, is mainly configured to display driving information such as a speed and navigation on a display device (for example, a windshield) in front of a driver, to reduce line-of-sight transfer time of the driver, avoid a pupil change caused by a line-of-sight transfer of the driver, and improve traveling safety and comfort. For example, the HUD includes a combiner-HUD (combiner-HUD, C-HUD) system, a windshield-HUD (windshield-HUD, W-HUD) system, and an augmented reality HUD (augmented reality HUD, AR-HUD) system. It should be understood that the HUD may also have another type of system with technology evolution. This is not limited in this application.

The display apparatus 130 is described by using the vehicle-mounted display and the projection display as an example. Embodiments of this application are not limited thereto. For example, the display apparatus 130 may alternatively be an optical display or a projection screen.

The mobile carrier in embodiments of this application may include a road transportation means, a water transportation means, an air transportation means, an industrial device, an agricultural device, an entertainment device, or the like. For example, the mobile carrier may be a vehicle. The vehicle is a vehicle in a broad sense, and may be a transportation means (for example, a commercial vehicle, a passenger vehicle, a motorcycle, a flight vehicle, or a train), an industrial vehicle (for example, a pallet truck, a trailer, or a tractor), an engineering vehicle (for example, an excavator, a bulldozer, or a crane), an agricultural device (for example, a lawn mower or a harvester), a recreation device, a toy vehicle, or the like. A type of the vehicle is not specifically limited in embodiments of this application. For another example, the mobile carrier may be a transportation means, for example, an airplane or a ship.

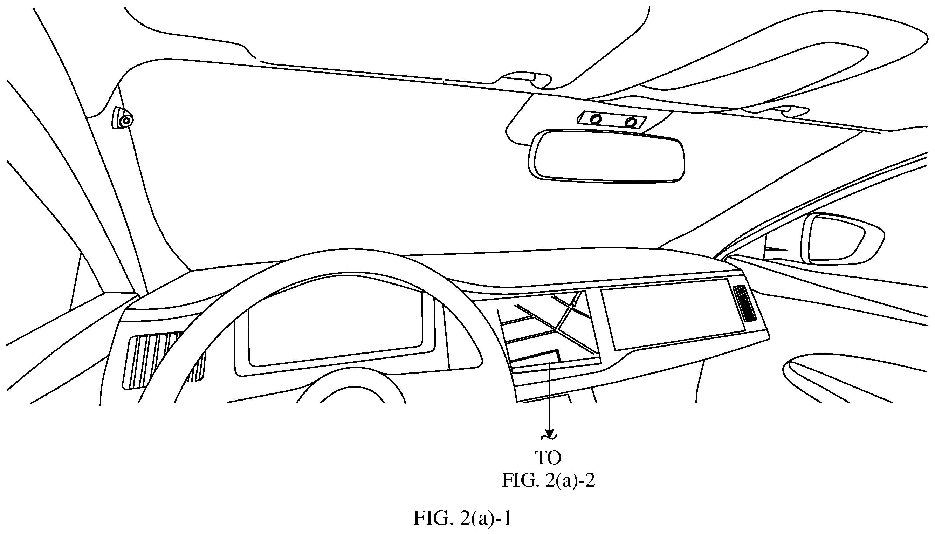

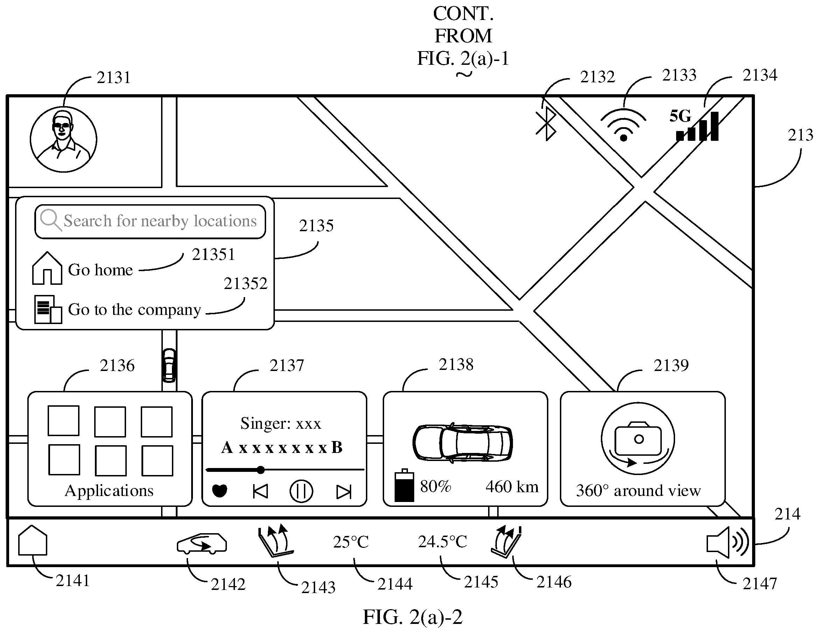

FIG. 2(a)-1 to FIG. 2(c)-2 show an example of a group of graphical user interfaces (graphical user interfaces, GUIs) according to an embodiment of this application.

As shown in FIG. 2(a)-1 and FIG. 2(a)-2, a vehicle displays a display interface 213 and a function bar 214 of an in-vehicle map application by using a central display. The display interface 213 includes profile picture information 2131 of a logged-in user account on the vehicle, a Bluetooth function icon 2132, a Wi-Fi function icon 2133, a cellular network signal icon 2134, an in-vehicle map application search box 2135, a card 2136 for switching to display all applications installed on the vehicle, a card 2137 for switching to display an in-vehicle music application, a card 2138 for displaying a state of charge of the vehicle and a remaining traveling range, and a card 2139 for displaying a 360-degree (°) around view function of the vehicle. The in-vehicle map application search box 2135 may include a Go home control 21351 and a Go to the company control 21352 that are set by a user. The function bar 214 includes an icon 2141 for switching to display a desktop, a vehicle internal circulation icon 2142, a driver seat heating function icon 2143, a driver-area air conditioner temperature display icon 2144, a front-passenger-area air conditioner temperature display icon 2145, a front passenger seat heating function icon 2146, and a volume setting icon 2147.

Vehicle 1 includes an offline map of city 1, the offline map includes a POI data set, and the POI data set includes location A, location B, and location D. Location A, location B, and location D include keywords with same pronunciation or similar pronunciation.

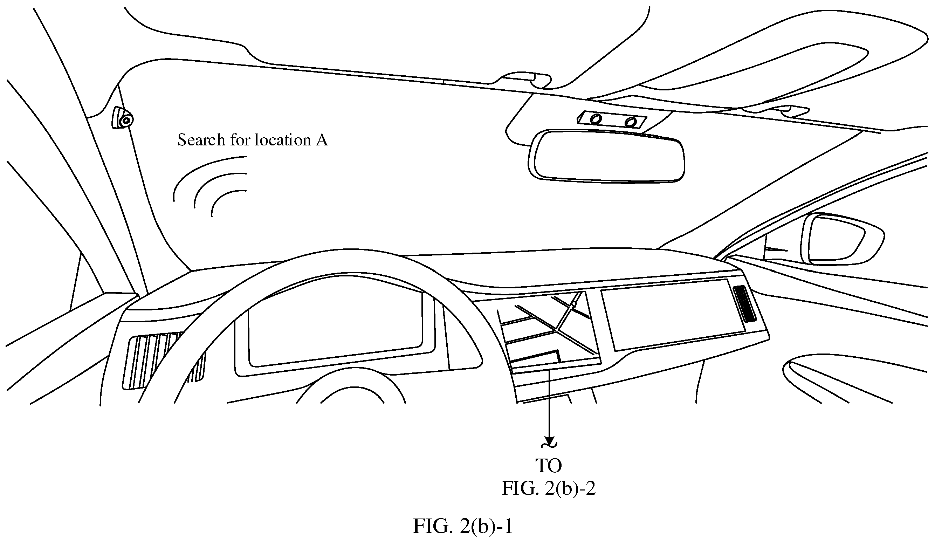

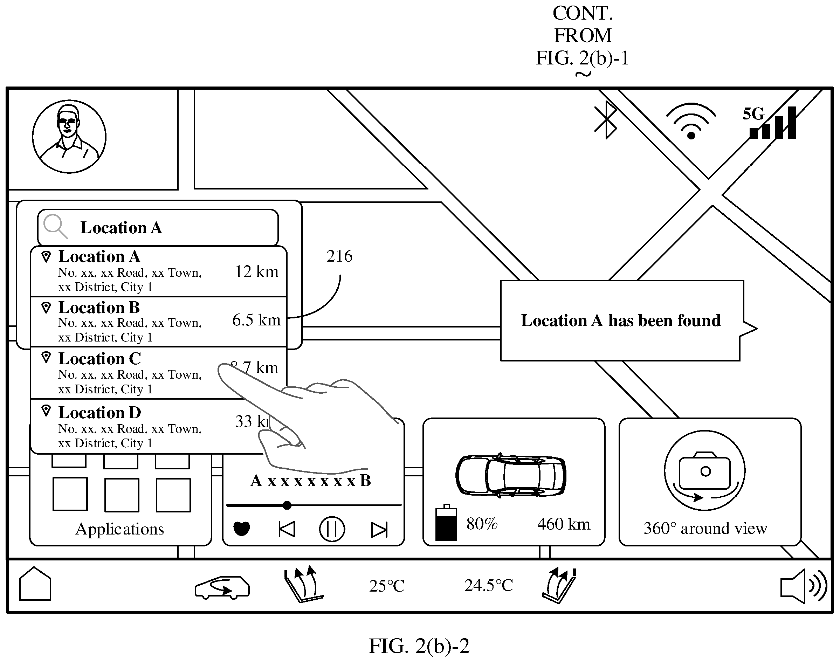

As shown in FIG. 2(b)-1 and FIG. 2(b)-2, the vehicle is in an online state in this case. When detecting a speech instruction "search for location A" sent by the user, the vehicle may parse the speech instruction. For example, the vehicle includes an ASR module and an NLU module. The ASR module is mainly configured to recognize a speech of the user as text content, and the NLU module is mainly configured to understand an intent (intent) of the user and perform slot (slot) parsing.

For example, information obtained by the ASR module by converting the speech into a text is: Search for location A. From this sentence, the NLU module can obtain, through parsing, content shown in Table 1.

**Table 1**

| Intent (intent) | "Search for location" |
|---|---|
| Slot (slot) | Location="location A" |

After obtaining the intent of the user and corresponding slot information, the NLU module may send the information to the in-vehicle map application. The in-vehicle map application may add "location A" to the search box 2135 based on the intent and the slot, and obtain a search list 216 corresponding to "location A". As shown in FIG. 2(b)-1 and FIG. 2(b)-2, the search list 216 includes four search results, which sequentially are "location A", "location B", "location C", and "location D" that are located in city 1. When detecting an operation of tapping the third search result "location C" by the user, the vehicle may display information such as a position of "location C" on the central display. In addition, when location C is not in the POI data set of the offline map, the vehicle may further add location C to the POI data set of the offline map. For example, the vehicle may add location C to a most searched keyword set in the POI data set.

In FIG. 2(b)-1 and FIG. 2(b)-2, the vehicle may send the slot (for example, location A) of the user to a map server, so that a cloud server obtains, based on location A, locations that have same or similar pronunciation with location A, for example, location A, location B, location C, and location D. The cloud server may send information about location A, location B, location C, and location D to the vehicle. The vehicle may display the search list 216 based on the received information. When an operation of selecting location C by the user is detected and location C is not in the POI data set of the offline map, the vehicle may add the information about location C to the POI data set.

At least partial information in speech information corresponding to location A, location B, location C, and location D is the same, or at least partial content in text content corresponding to location A, location B, location C, and location D is the same.

For example, location A is "Jinngdong community", location B is "Jiingdong community" (Jiingdong and Jinngdong here are homophone for what the user wants to search for in a target language), location C is "Jingdong community", and location D is "Jingdong building". The locations all carry content pronounced as "jingdong".

For another example, location A is "B restaurant", location B is "B street", location C is "bee restaurant", and location D is "bee community". The locations carry keywords "B" and "bee" with same or similar pronunciation.

For example, the vehicle may optimize a speech interaction module on a vehicle side based on an updated POI data set. For example, when it is detected next time that a speech navigation instruction sent by the user includes at least partial information in speech information "location A", "location C" may be preferentially obtained through matching for the user.

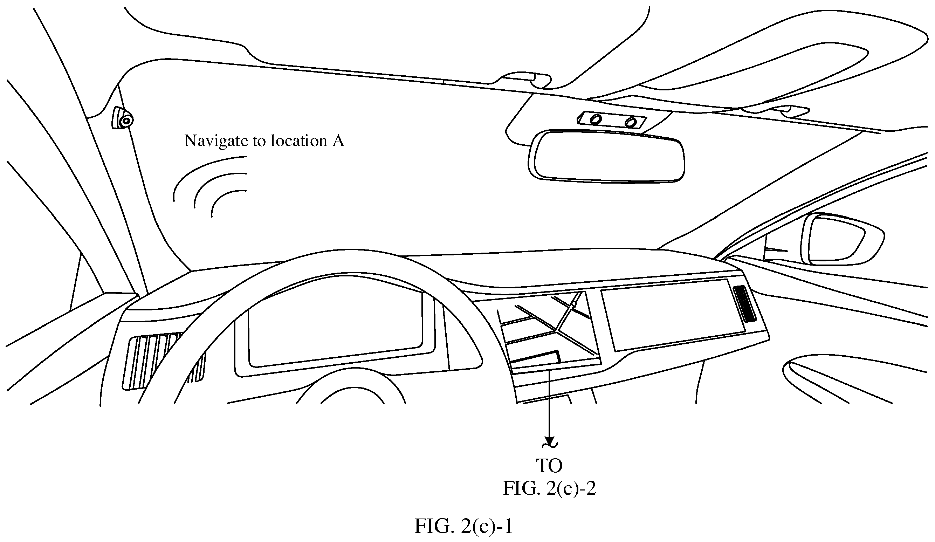

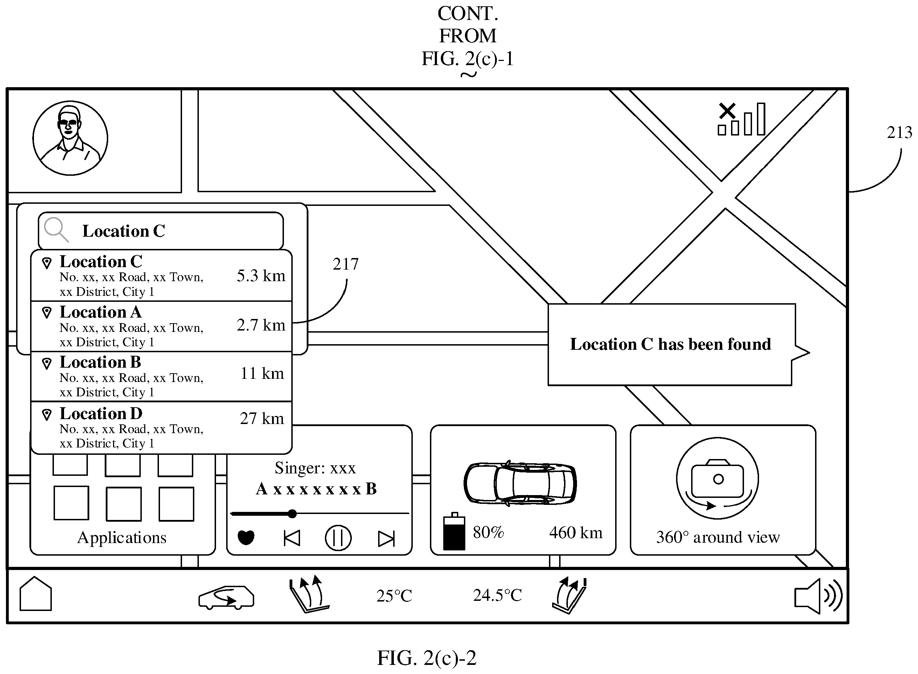

As shown in FIG. 2(c)-1 and FIG. 2(c)-2, the vehicle is in an offline state in this case (a cellular network signal icon 215 shows that the vehicle is currently in an offline state). When detecting a speech instruction "navigate to location A" sent by the user, the vehicle may parse the speech instruction. Because the most searched keyword set in the POI data set includes a most searched keyword "location C", information obtained by converting a speech into a text by using the ASR module is "navigate to location C". After obtaining the intent of the user and corresponding slot information, the NLU module may send the information to the in-vehicle map application. The in-vehicle map application may add "location C" to the search box 2135 based on the intent and the slot, and obtain a search list 217 corresponding to "location C". The search list 217 includes four search results, which are "location C", "location A", "location B", and "location D" sequentially.

In an embodiment, when detecting an operation of tapping the first search result "location C" by the user, the vehicle may display, on the central display, one or more navigation paths for navigating from a current position of the vehicle to location C.

In this embodiment of this application, when a location of interest to the user (or a used location) is obtained and the location is not in the POI data set of the offline map, the vehicle may add information about the location of interest to the user to the POI data set of the offline map. In this way, when the vehicle is in the offline state, the user can view, in a search list by sending a navigation instruction, more search results that better meet an expectation of the user. This helps improve navigation experience of the user.

The vehicle may further train the speech interaction module on the vehicle side based on the location of interest to the user, to establish a preferential matching relationship between the location of interest to the user and speech information corresponding to the location of interest to the user. In this way, after the vehicle is in the offline state and the speech navigation instruction is sent, the speech navigation instruction may be recognized by using an optimized speech interaction module, and a location that better meets an expectation of the user is preferentially displayed by using the offline map. This helps improve speech recognition accuracy and offline searching accuracy in an offline scenario, and helps improve the navigation experience of the user.

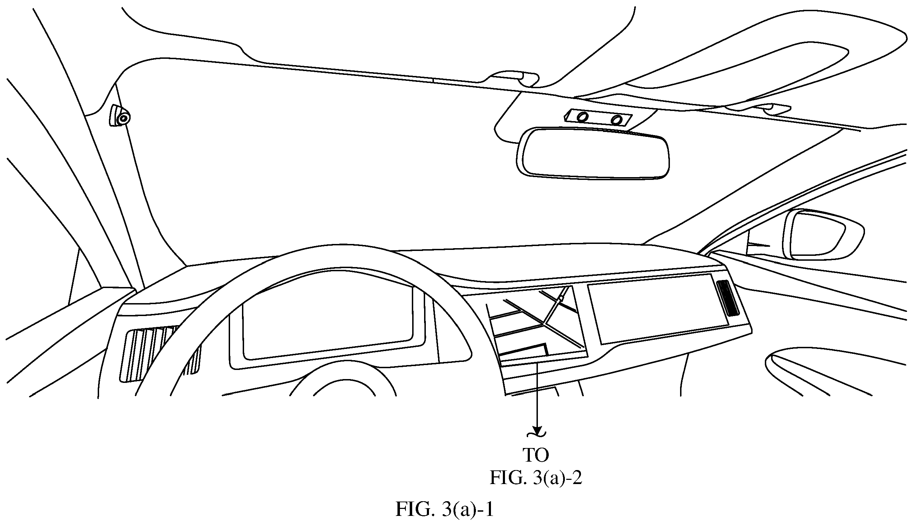

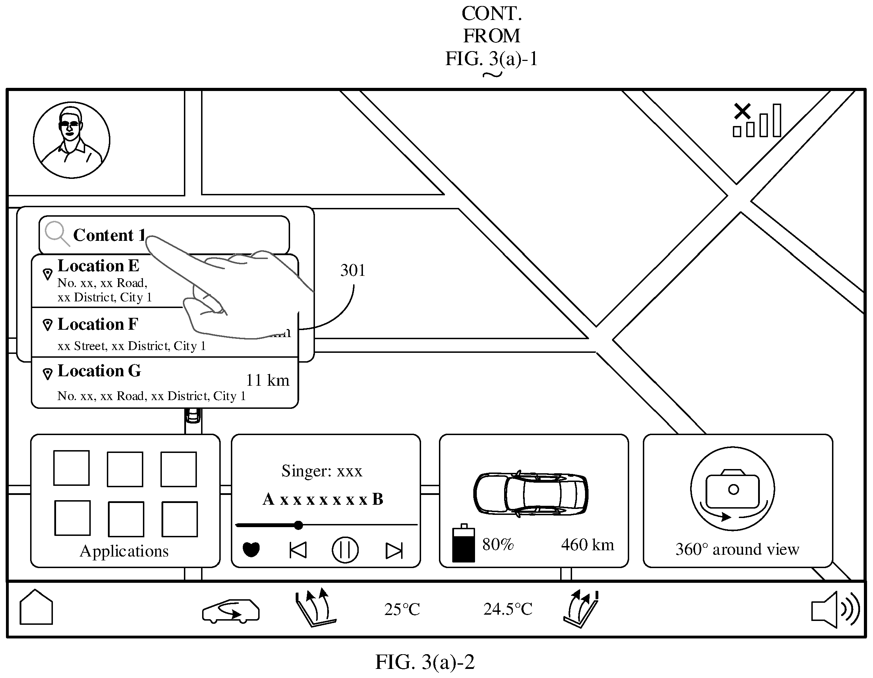

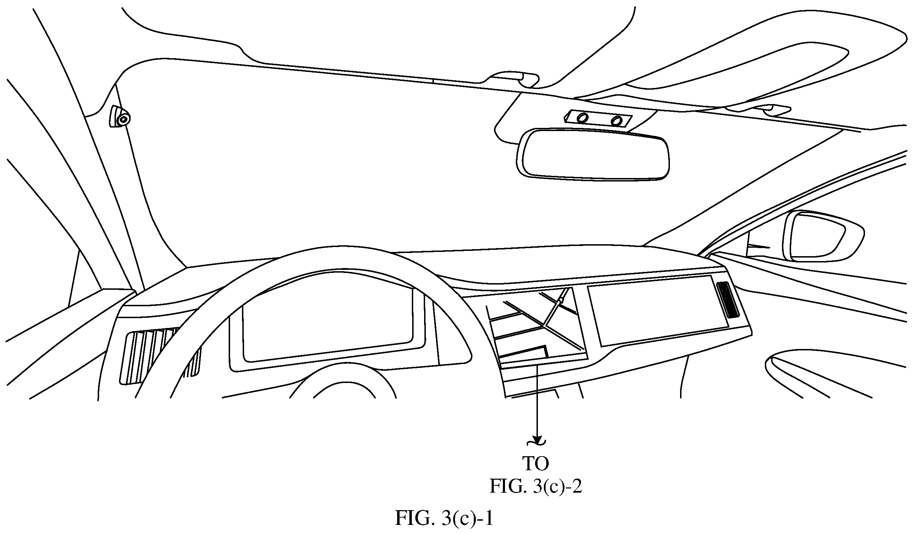

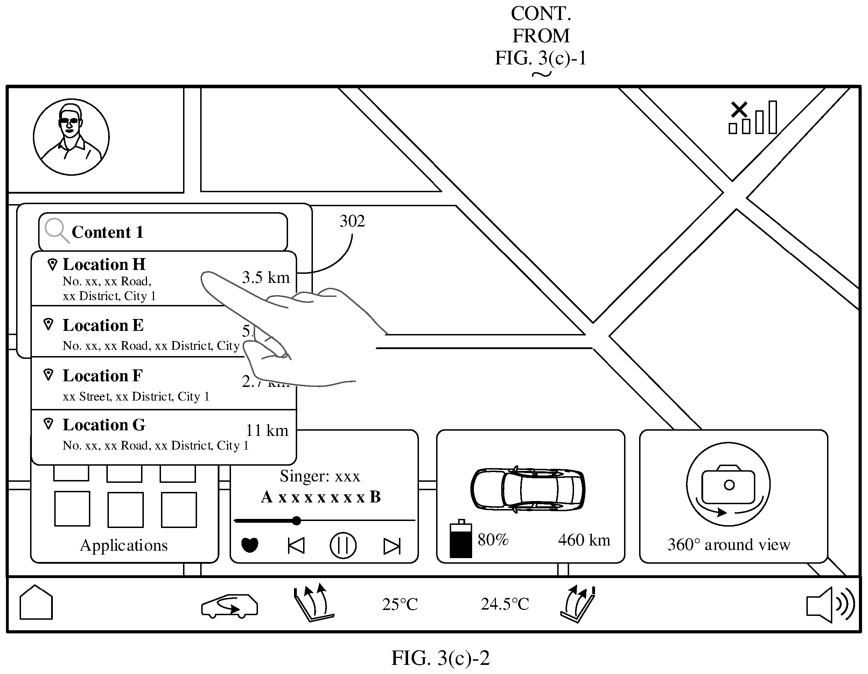

FIG. 3(a)-1 to FIG. 3(c)-2 show an example of a group of GUIs according to an embodiment of this application.

As shown in FIG. 3(a)-1 and FIG. 3(a)-2, a vehicle is in an offline state, and the vehicle stores an offline map of city 1. When it is detected that a user enters "content 1" in a search box 2135, a search list 301 may be displayed on a central display based on locations stored in the offline map. The search list 301 includes three search results, which are "location E", "location F", and "location G" sequentially.

For example, content 1 may be "Cuihua", location E may be "Cuihua community", location F may be "Cuihua mountain", and location G may be "Cuihua restaurant".

For example, content 1 may be "B", location E may be "B restaurant", location F may be "B street", and location G may be "bee restaurant".

A POI data set of the offline map of city 1 may include a plurality of POIs, and each POI may include attribute information such as a name, an address, coordinates, and a category of a location. For example, a POI data set of city 1 may include information about "location E", "location F", and "location G".

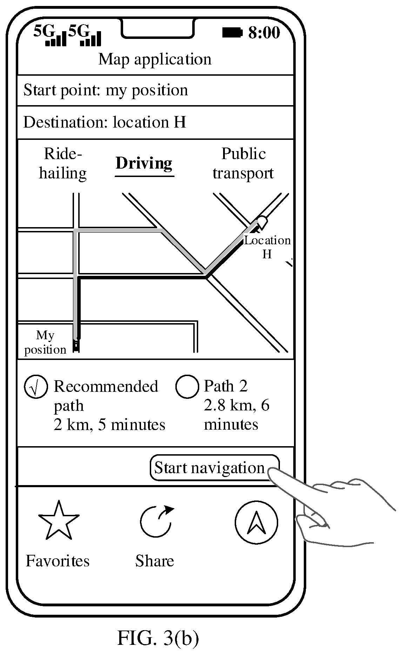

As shown in FIG. 3(b), a logged-in account on a mobile phone is associated with a logged-in account on the vehicle. When the mobile phone detects an operation of searching for a navigation path from a current position to location H by the user by using a map application, the mobile phone may store information about location H in a POI data set on a mobile phone side. When the mobile phone establishes a connection to the vehicle, the mobile phone may send the information about location H to the vehicle. When a POI data set of an offline map of the vehicle does not include location H, the vehicle may store the information about location H in the POI data set of the offline map of city 1. For example, the vehicle may add location C to a most searched keyword set in the POI data set.

At least partial information in speech information corresponding to location E, location F, location G, and location H is the same, or at least partial content in text content corresponding to location E, location F, location G, and location H is the same.

For example, location H may be "Cuihua kindergarten". The locations "Cuihua community", "Cuihua mountain", "Cuihua restaurant", and "Cuihua kindergarten" all carry content pronounced as "cuihua".

For example, location H may be "B school". The locations "B restaurant", "B street", "bee restaurant", and "B school" carry keywords "B" and "bee" with same or similar pronunciation.

In an embodiment, that a logged-in account on a mobile phone is associated with a logged-in account on the vehicle may be understood as that the logged-in account on the mobile phone is the same as the logged-in account on the vehicle, or the logged-in account on the mobile phone and the logged-in account on the vehicle are in a same family group, or the logged-in account on the mobile phone is an account authorized by the logged-in account on the vehicle.

In an embodiment, the mobile phone may send the information about location H to the vehicle in a device OneHop manner. For example, the mobile phone may send the information about location H to the vehicle by using a near field communication (near field communication, NFC) technology.

As shown in FIG. 3(c)-1 and FIG. 3(c)-2, the vehicle is in the offline state. When it is detected that the user enters "content 1" in the search box 2135, because the most searched keyword set of the POI data set includes a most searched keyword "location H", location H may be preferentially displayed in a search list. For example, the vehicle may display a search list 302 on the central display. The search list 302 includes four search results, which are "location H", "location E", "location F", and "location G" sequentially.

In an embodiment, when detecting an operation of tapping the first search result "location H" by the user, the vehicle may display, on the central display, one or more navigation paths for navigating from the current position of the vehicle to location H.

In this embodiment of this application, the vehicle may obtain a location of interest to the user (or a used location) from the mobile phone. When the location is not in the POI data set of the offline map of the vehicle, the location may be added to the POI data set of the offline map. In this way, when the vehicle is in the offline state, the user can view, in a search list by sending a navigation instruction, more search results that better meet an expectation of the user. This helps improve navigation experience of the user.

The vehicle may further train a speech interaction module on a vehicle side based on the location of interest to the user, to establish a preferential matching relationship between the location of interest to the user and speech information corresponding to the location of interest to the user. In this way, after the vehicle is in the offline state and a speech navigation instruction is sent, the speech navigation instruction may be recognized by using an optimized speech interaction module, and a location close to an expectation of the user may be preferentially displayed by using the offline map. This helps improve speech recognition accuracy and offline searching accuracy in an offline scenario, and helps improve the navigation experience of the user.

In the scenario shown in FIG. 3(a)-1 to FIG. 3(c)-2, an example in which the mobile phone sends the information about location H to the vehicle is used for description. Embodiments of this application are not limited thereto. For example, the vehicle may alternatively send, to the mobile phone, information about the location of interest to the user obtained by the vehicle. For example, after detecting location H in city 1 that is searched for by the user, the vehicle may send the information about location H to a mobile phone that logs in to a same account as the vehicle. When the POI data set that is of the offline map of city 1 and that is stored in the mobile phone does not include the information about location H, the mobile phone may add location H to the POI data set of the offline map of city 1. In this way, when the mobile phone is in an offline state and detects that the user enters at least partial content in content 1 in a search box of the offline map, or detects that the user sends at least partial information in speech information corresponding to content 1, the mobile phone may preferentially display the information about location H in a search result.

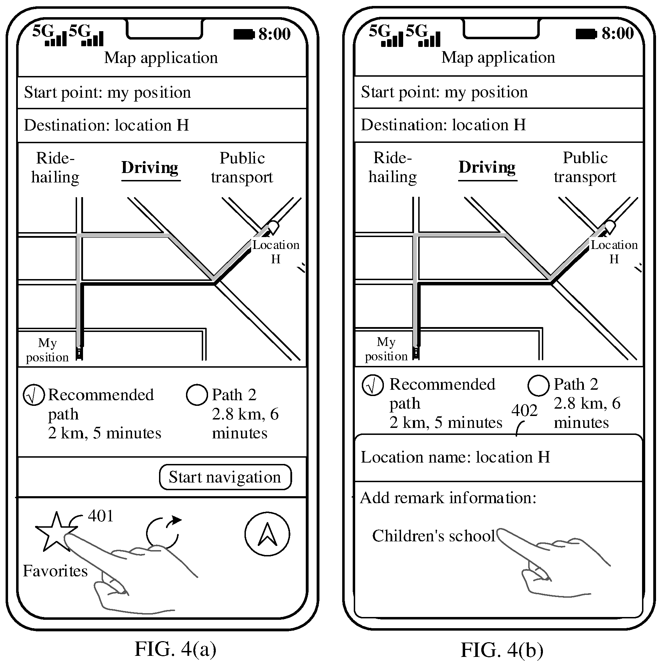

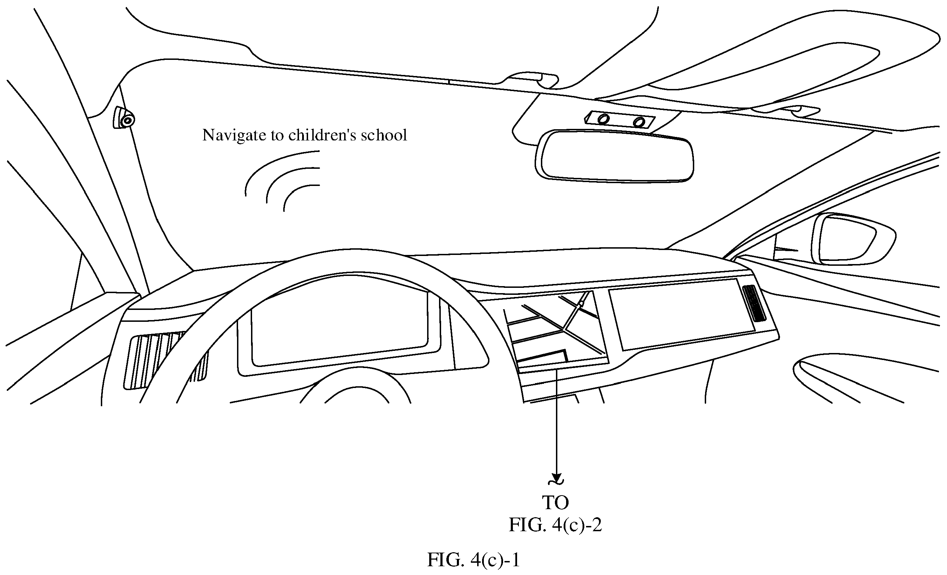

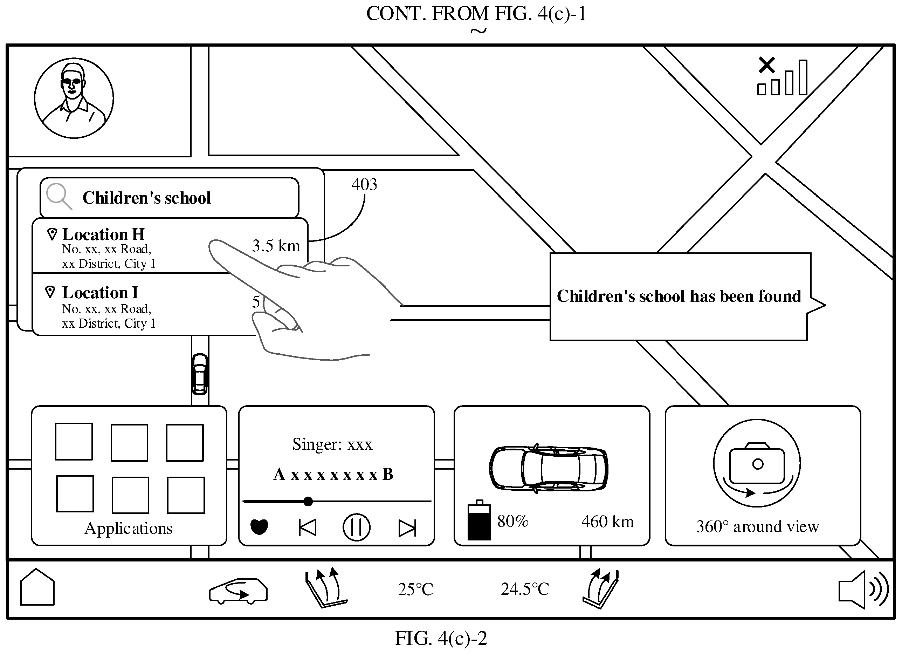

FIG. 4(a) to FIG. 4(c)-2 show an example of a group of GUIs according to an embodiment of this application.

As shown in FIG. 4(a), a mobile phone displays a navigation interface from a current position to location H, and the navigation interface includes a favorites control 401. When detecting an operation of tapping the control 401 by a user, the mobile phone may display a GUI shown in FIG. 4(b).

As shown in FIG. 4(b), the mobile phone may display a prompt box 402. The prompt box 402 may be used to prompt the user to add remark information for location H. For example, the remark information added by the user is "children's school". After establishing a connection to a vehicle, the mobile phone may send information about location H (including the remark information "children's school") to the vehicle. After receiving the information, the vehicle may optimize a speech interaction module. For example, when it is detected next time that the user sends a corresponding speech navigation instruction including "content 1" or a corresponding speech navigation instruction including "children's school", "location H" may be preferentially obtained through matching for the user.

As shown in FIG. 4(c)-1 and FIG. 4(c)-2, the vehicle is in an offline state in this case. When detecting a speech instruction "navigate to children's school" sent by the user, the vehicle may parse the speech instruction. Because the remark information corresponding to "location H" in a POI data set includes "children's school", information obtained by converting a speech into a text by using an ASR module is "navigate to children's school". After obtaining an intent of the user and corresponding slot information, an NLU module may send the information to an in-vehicle map application. The in-vehicle map application may add "children's school" to a search box 2135 based on the intent and the slot, and obtain a search list 403 corresponding to "children's school". The search list 403 includes two search results, which are "location H" and "location I" sequentially. For example, location I may be a location associated with at least a part of speech information corresponding to "children's school".

In an embodiment, when detecting an operation of tapping the first search result "location H" by the user, the vehicle may display, on a central display, one or more navigation paths for navigating from the current position of the vehicle to location H.

In this embodiment of this application, the vehicle may record a location of interest to the user and remark information of the location, and a speech interaction module on a vehicle side may be optimized by using a name and remark information (or an alias) of the location of interest to the user. In this way, after the vehicle is in the offline state and a speech navigation instruction including the remark information is sent, a location that better meets an expectation of the user may be output by using an optimized speech interaction module. This helps improve speech recognition accuracy and offline searching accuracy in an offline scenario, and helps improve experience of the user in the offline scenario.

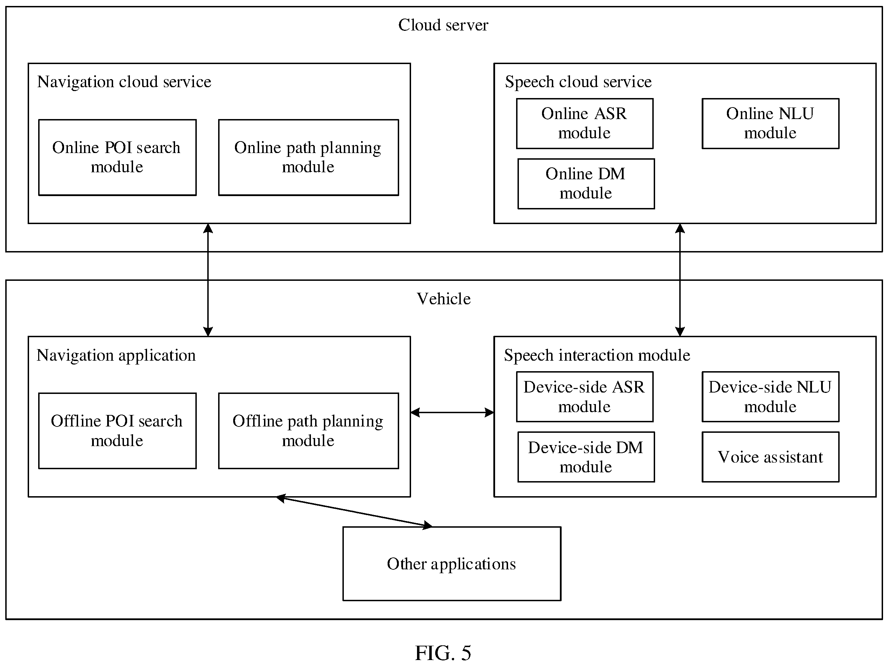

FIG. 5 is a diagram of a system architecture according to an embodiment of this application. As shown in FIG. 5, the system architecture includes a cloud server and a vehicle. The cloud server includes a navigation cloud service and a speech cloud service. The navigation cloud service includes an online POI search module and an online path planning module, and the speech cloud service includes an online ASR module, an online NLU module, and an online dialogue manager (dialogue manager, DM) module. The online POI search module is used by a cloud engine to implement address searching, and the online path planning module is used by the cloud engine to implement point-to-point path planning. The online ASR module is used by the cloud engine to implement speech text recognition, the online NLU module is used by the cloud engine to implement semantic understanding, and the online DM module is used by the cloud engine to implement dialogue management.

The vehicle includes a navigation application (or a map application), a speech interaction module, and other applications. The navigation application includes an offline POI search module and an offline path planning module. The speech interaction module includes a device-side ASR module, a device-side NLU module, a device-side DM module, and a voice assistant. The offline POI search module is used by a vehicle-side engine to implement address searching, and the offline path planning module is used by the vehicle-side engine to implement point-to-point path planning. The device-side ASR module is used by the vehicle-side engine to implement speech text recognition, the device-side NLU module is used by the vehicle-side engine to implement semantic understanding, and the device-side DM module is used by the vehicle-side engine to implement dialogue management. The other applications may include a travel application, a video application, a social application, and the like.

In an embodiment, an interconnection module may be further included between the navigation application and the speech interaction module. For example, the vehicle includes a plurality of navigation applications. After recognizing an intent and slot information of a user, the speech interaction module may send the information to the interconnection module, and the interconnection module sends the information to a corresponding navigation application.

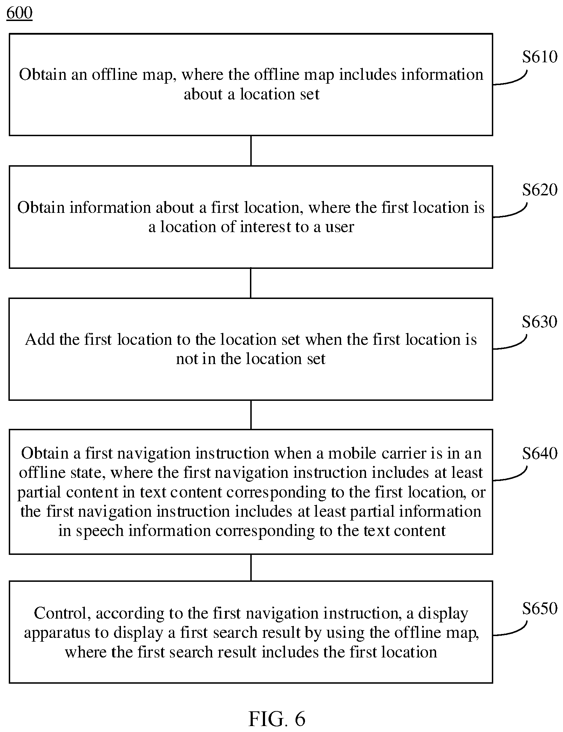

FIG. 6 is a schematic flowchart of an offline navigation method 600 for a mobile carrier according to an embodiment of this application. The method 600 may be performed by the mobile carrier 100, or the method 600 may be performed by the computing platform 120, or the method 600 may be performed by a system including the computing platform 120 and the display apparatus 130, or the method 600 may be performed by a system-on-a-chip (system-on-a-chip, SoC) on the computing platform 120, or the method 600 may be performed by a processor, a chip, or a circuit on the computing platform 120. The method 600 includes the following steps.

S610: Obtain an offline map, where the offline map includes information about a location set.

Optionally, the method 600 further includes: when stay duration of the mobile carrier in a first area is greater than or equal to preset duration, controlling a prompt apparatus to prompt a user to download the offline map, where the offline map includes a general POI data set. The general POI data set in the offline map initially obtained by the mobile carrier from a cloud server includes information about a plurality of locations.

For example, the general POI data set includes information about location A, location B, and location D. When the mobile carrier is in an offline state and it is detected that the user enters "location A" in a search box of the offline map, an offline POI search module may search for the information about location A by using the general POI data set, and display the information about location A, location B, and location D by using a search list when location A is found. At least partial information in speech information corresponding to location A, location B, and location D is the same, or at least partial content in text content corresponding to location A, location B, and location D is the same. When an input of selecting location A by the user is detected, an offline path planning module may plan one or more navigation paths from a current position of the user to location A.

For example, the first area may be a province, a state, or a city.

For example, the mobile carrier is a vehicle. When detecting that duration of staying in city 1 reaches 48 hours, the vehicle may prompt, by using the prompt apparatus, the user to download an offline map of city 1. For example, the vehicle may send speech information "It is detected that you have stayed in city 1 for more than 48 hours. To ensure a navigation capability of the vehicle in an offline state, do you want to download an offline map of city 1?". When detecting that the user sends a speech instruction "download an offline map of city 1", the vehicle may request map information of city 1 from the cloud server. After receiving a request of the vehicle, the cloud server may send the offline map of city 1 to the vehicle.

Optionally, before the controlling a prompt apparatus to prompt a user to download the offline map, the method 600 further includes: determining that the mobile carrier is in a parked state.

For example, the mobile carrier is the vehicle. When detecting that the duration of staying in city 1 reaches 48 hours and a gear of the vehicle is a parking gear (P gear), the vehicle may prompt, by using the prompt apparatus, the user to download the offline map of city 1.

S620: Obtain information about a first location, where the first location is a location of interest to the user.

The location of interest to the user may also be understood as a location used by the user, or a location searched for by the user by using the mobile carrier or a mobile terminal.

Optionally, the obtaining information about a first location includes: obtaining the information about the first location when an input of searching for the first location by the user by using an application is detected.

For example, the vehicle includes a travel app. When detecting that the user searches for scenic spot 1 in city 1 by using the travel app, the vehicle may obtain attribute information such as a name, an address, coordinates, and a category of scenic spot 1.

For example, the vehicle includes a food app. When detecting that the user searches for restaurant 1 in city 1 by using the food app, the vehicle may store attribute information such as a name, an address, coordinates, and a category of restaurant 1.

Optionally, the obtaining the information about the first location when that the user searches for the first location by using the application is detected includes: obtaining the information about the first location when an input of searching for the first location by the user by using a map application is detected.

For example, the vehicle includes a map app. When detecting that the user searches for location H in city 1 by using the map app, the vehicle may obtain attribute information such as a name, an address, coordinates, and a category of location H.

Optionally, the obtaining the information about the first location when an input of searching for the first location by the user by using a map application is detected includes: obtaining the information about the first location when an input of navigating to the first location by the user by using the map application is detected.

For example, when detecting that the user searches for a navigation path from a current position to location H by using the map app, the vehicle may obtain attribute information such as a name, an address, coordinates, and a category of location H.

Optionally, the obtaining information about a first location includes: receiving the information about the first location sent by the mobile terminal.

For example, as shown in FIG. 3(b), when detecting that the user searches the map app for information about location H, the mobile phone may send the information about location H to the vehicle associated with a logged-in account on the mobile phone.

S630: Add the first location to the location set when the first location is not in the location set.

For example, the mobile carrier may include a device-side POI data set (or a most searched keyword data set), and the first location may be added to the device-side POI data set. The device-side POI data set may be connected to the offline map via a software development kit (software development kit, SDK) of the map app. In this way, the device-side POI data set and the general POI data set form a POI data set of the offline map.

For example, the general POI data set of the offline map initially obtained by the mobile carrier does not include information about scenic spot 1, restaurant 1, and location H. When obtaining the information about scenic spot 1, restaurant 1, and location H, the mobile carrier may add the information about scenic spot 1, restaurant 1, and location H to the device-side POI data set. In this way, when the mobile carrier is in the offline state, the user can find the information about scenic spot 1, restaurant 1, and location H by using the offline map.

For example, Table 2 shows information about the device-side POI data set and the general POI data set that are stored in the mobile carrier.

**Table 2**

| Device-side POI data set | General POI data set |
|---|---|
| Scenic spot 1 | Location A |
| Restaurant 1 | Location B |
| Location H | Location C |
| ··· | ··· |

The foregoing is described by using an example in which the device-side POI data set and the general POI data set are two independent POI data sets. Embodiments of this application are not limited thereto. For example, the offline map may include one POI data set, and the POI data set includes two subsets. One subset may be the device-side POI data set, and the other subset may be the general POI data set. The device-side POI data set in the POI data set initially obtained by the vehicle from the cloud server is an empty set.

Optionally, the device-side POI data set may be further divided. For example, the device-side POI data set may include location set A used by the user by using the map application and location set B used by the user by using a non-map application.

For example, Table 3 shows information about the device-side POI data set and the general POI data set that are stored in the mobile carrier.

**Table 3**

| Device-side POI data set | | General POI data set |
|---|---|---|
| Location set A | Location set B | |
| Location H ... | Scenic spot 1 | Location A, location B, location C... |
| | Restaurant 1 | |
| | ... | |

For example, after obtaining information about scenic spot 1, restaurant 1, location A, location B, and location H, the vehicle may first determine whether these locations are in the general POI data set. If location A and location B are already in the general POI data set, and scenic spot 1, restaurant 1, and location H are not in the general POI data set, the vehicle may add the information about scenic spot 1, restaurant 1, and location H to the device-side POI data set.

Optionally, before the adding the first location to the location set, the method further includes: determining that a quantity of times of obtaining the first location is greater than or equal to a preset quantity of times.

For example, the vehicle may record a manner of obtaining the first location. If the first location is a location navigated by the user by using the map app, the preset quantity of times may be 1. Alternatively, if the first location is a location used by the user by using the non-map app, the preset quantity of times may be 2.

There is no actual sequence between S610 and S620. For example, after the offline map of city 1 is obtained, if an input of navigating to location C by the user by using the map application is detected and location C is not in the POI data set of the offline map, the vehicle may add information about location C to the device-side POI data set. For another example, before the offline map of city 1 is obtained, if an input of navigating to location C by the user by using the map application is detected, the vehicle may add location C to the device-side POI data set. After obtaining the offline map of city 1, the vehicle may update (or expand) POI data of the offline map based on locations in the device-side POI data set. For example, the device-side POI data set includes location C, and the POI data set of the offline map does not include location C. In this case, the information about location C may be added to the POI data set of the offline map.

The foregoing is described by using an example in which some locations in the device-side POI data set are added to the POI data set of the offline map. Embodiments of this application are not limited thereto. For example, the offline map obtained by the vehicle from the map server includes the general POI data set. The vehicle may combine a POI data set on a vehicle side and the general POI data set to form the POI data set of the offline map.

S640: Obtain a first navigation instruction when the mobile carrier is in the offline state, where the first navigation instruction includes at least partial content in text content corresponding to the first location, or the first navigation instruction includes at least partial information in speech information corresponding to the text content.

For example, the first navigation instruction is a text input of the user in a search box of the map application, and the text input instruction may include at least partial content (for example, "Cuihua") in "Cuihua kindergarten".

For example, the first navigation instruction may be a speech navigation instruction sent by the user, and the speech navigation instruction may be "A, dao hang qu cui hua" or "A, show me the path to B". A name of a voice assistant of the vehicle is A.

S650: Control, according to the first navigation instruction, a display apparatus to display a first search result by using the offline map, where the first search result includes the first location.

Optionally, the method 600 further includes: establishing a first matching relationship between the first location and the at least partial content in the text content corresponding to the first location and/or the at least partial information in the speech information corresponding to the text content. The controlling, according to the first navigation instruction, a display apparatus to display a first search result by using the offline map, where the first search result includes the first location includes: controlling, according to the first navigation instruction and based on the first matching relationship, the display apparatus to display the first search result by using the offline map, where the first search result includes the first location and a second location, the second location is associated with the at least partial content or the at least partial information, and a priority of the first location is higher than a priority of the second location.

The foregoing process of establishing the first matching relationship may also be understood as a process of training the offline POI search module and a speech interaction module on the vehicle side by the vehicle.

Optionally, the establishing a first matching relationship between the first location and the at least partial content in the text content corresponding to the first location includes: establishing a preferential matching relationship between the text content entered by the user and a location in the device-side POI data set.

The establishing a preferential matching relationship between the text content entered by the user and a location in the device-side POI data set may also be understood as that a priority of matching between the text content entered by the user and the location in the device-side POI data set is higher than a priority of matching between the text content entered by the user and a location in the general POI data set.

During POI searching, a matching priority of the location in the device-side POI data set is higher than a matching priority of the location in the general POI data set, to ensure that the location of interest to the user can be preferentially detected. That a matching priority of the location in the device-side POI data set is higher than a matching priority of the location in the general POI data set may also be understood as that a search result of the location in the device-side POI data set is preferentially displayed in a search result based on an input of the user by using the offline map.

For example, as shown in FIG. 3(c)-1 and FIG. 3(c)-2, location H is a location in the device-side POI data set, location E, location F, and location G are locations in the general POI data set, and text content corresponding to each of location E, location F, location G, and location H includes content 1. When the vehicle is in the offline state and it is detected that the user enters "content 1" in the search box, the offline POI search module may preferentially perform searching on locations in the device-side POI data set, to obtain, through searching, location H associated with "content 1"; and then perform searching on the general POI data set, to obtain location E, location F, and location G that are associated with "content 1". In this way, the vehicle may sequentially display location H, location E, location F, and location G in a search list 302.

For example, when it is detected that the user enters text content "Cuihua" in the search box, the offline POI search module may first perform searching on the device-side POI data set based on the text content "Cuihua" entered by the user, to obtain a location "Cuihua kindergarten"; and then perform searching on the general POI data set, to obtain locations "Cuihua community", "Cuihua mountain", and "Cuihua restaurant". "Cuihua kindergarten", "Cuihua community", "Cuihua mountain", and "Cuihua restaurant" may be sequentially displayed in the search result.

For example, when it is detected that the user enters text content "B" in the search box, the offline POI search module may first perform searching on the device-side POI data set based on the text content "B" entered by the user, to obtain a location "B school" through searching; and then perform searching on the general POI data set, to obtain locations "B restaurant", "B street", and "bee restaurant". "B school", "B restaurant", "B street", and "bee restaurant" may be sequentially displayed in the search result.

Optionally, the method further includes: establishing, in the device-side POI data set, a preferential matching relationship between the text content entered by the user and a location in location set A. In this way, a priority of matching between the text content entered by the user and the location in location set A can be higher than a priority of matching between the text content entered by the user and a location in location set B.

Optionally, the establishing a first matching relationship between the first location and the at least partial information in the speech information corresponding to the text content may be understood as optimizing a device-side ASR module based on data in the device-side POI data set.

For example, as shown in FIG. 3(b), when detecting that the user searches the map app for information about location H, the mobile phone may send the information about location H to the vehicle associated with a logged-in account on the mobile phone. The vehicle may add the information about location H to the device-side POI data set, and optimize the device-side ASR model based on the information about location H.

For example, location H is "Cuihua kindergarten". In a model training phase, the vehicle may establish, in the device-side ASR model, a preferential matching relationship between at least partial information in speech information "cui hua you er yuan" and text content "Cuihua kindergarten". For example, the device-side ASR model may establish a preferential matching relationship between speech information "cui hua" and text content "Cuihua" (or the location "Cuihua kindergarten"), or may establish a preferential matching relationship between speech information "you er yuan" and text content "kindergarten". In addition, in the offline POI search module, a preferential matching relationship between at least partial content in the text content "Cuihua kindergarten" and the location "Cuihua kindergarten" is established. For example, a preferential matching relationship between the text content "Cuihua" and the location "Cuihua kindergarten" is established, or a preferential matching relationship between the text content "kindergarten" and the location "Cuihua kindergarten" is established.

For example, location H is "Jingdong community". In a model training phase, the vehicle may establish, in the device-side ASR model, a preferential matching relationship between at least partial information in speech information "jing dong xiao qu" and text content "Jingdong community". For example, the device-side ASR model may establish a preferential matching relationship between speech information "jing dong" and text content "Jingdong", or may establish a preferential matching relationship between speech information "xiao qu" and text content "community". In addition, in the offline POI search module, a preferential matching relationship between at least partial content in the text content "Jingdong community" and a location "Jingdong community" is established. For example, a preferential matching relationship between the text content "Jingdong" and the location "Jingdong community" is established, or a preferential matching relationship between the text content "community" and the location "Jingdong community" is established.

For example, in a model inference phase, when it is detected that the user sends a speech navigation instruction "dao hang qu jing dong xiao qu", because a preferential matching relationship between the speech information "jing dong xiao qu" and the text content "Jingdong community" has been established in the trained device-side ASR model, the trained device-side ASR model may directly convert the speech navigation instruction into text content: navigate to Jingdong community. A device-side NLU module may analyze an intent and slot information of the user, to obtain that the intent of the user is "navigate to destination" and the slot information is "destination=Jingdong community". The device-side NLU module may send the intent and slot information of the user to a navigation application. The offline POI search module first performs searching on the device-side POI data set to obtain the location "Jingdong community"; and then performs searching on the general POI data set to obtain locations "Jinngdong community", "Jiingdong community", and "Jingdong building" that have similar pronunciation with the location "Jingdong community". "Jingdong community", "Jinngdong community", "Jiingdong community", and "Jingdong building" may be sequentially displayed in the search result.

For example, location H is "B school". In a model training phase, the vehicle may establish, in the device-side ASR model, a preferential matching relationship between at least partial information in speech information "B school" and text content "B school". For example, the device-side ASR model may establish a preferential matching relationship between speech information "B" and text content "B school", or may establish a preferential matching relationship between speech information "school" and text content "B school". In addition, in the offline POI search module, a preferential matching relationship between at least partial content in the text content "B school" and a location "B school" is established. For example, a preferential matching relationship between the text content "B" and the location "B school" is established, or a preferential matching relationship between the text content "school" and the location "B school" is established.

For example, in a model inference phase, when it is detected that the user sends a speech navigation instruction "show me the path to B school", because a preferential matching relationship between the speech information "B school" and the text content "B school" has been established in the trained device-side ASR model, the trained device-side ASR model may directly convert the speech navigation instruction into text content: show me the path to B school. A device-side NLU module may analyze an intent and slot information of the user, to obtain that the intent of the user is "navigate to destination" and the slot information is "destination=B school". The device-side NLU module may send the intent and slot information of the user to a navigation application. The offline POI search module first performs searching on the device-side POI data set to obtain the location "B school"; and then performs searching on the general POI data set to obtain locations "bee school", "B restaurant", and "bee restaurant" that have similar pronunciation with the location "B school". "B school", "bee school", "B restaurant", and "bee restaurant" may be sequentially displayed in the search result.

Optionally, the information about the first location includes remark information of the first location, and the method 600 further includes: establishing a second matching relationship between the first location and at least partial content in the remark information and/or at least partial information in speech information corresponding to the remark information; obtaining a second navigation instruction when the mobile carrier is in the offline state, where the second navigation instruction includes the at least partial content in the remark information, or the second navigation instruction includes the at least partial information in the speech information corresponding to the remark information; and controlling, according to the second navigation instruction and based on the second matching relationship, the display apparatus to display a second search result by using the offline map, where the second search result includes the first location and a third location, and the priority of the first location is higher than a priority of the third location.

For example, the remark information is "children's school". When it is detected that the user adds "Cuihua kindergarten" to favorites by using the map app and adds the remark information "children's school" to "Cuihua kindergarten", a name, a position, coordinates, a category, and the remark information of "Cuihua kindergarten" may be added to the device-side POI data set. The vehicle may train the device-side ASR model based on the data in the device-side POI data set.

For example, in a model training phase, the vehicle may establish, in the device-side ASR model, a preferential matching relationship between at least partial information in speech information "xiao peng you de xue xiao" and text content "children's school". For example, the device-side ASR model may establish a preferential matching relationship between speech information "xiao peng you" and text content "children", or may establish a preferential matching relationship between speech information "xue xiao" and text content "school", or establishes a preferential matching relationship between speech information "xiao peng you de xue xiao" and text content "children's school". In addition, in the offline POI search module, a preferential matching relationship between at least partial content in the text content "children's school" and the location "Cuihua kindergarten" is established. For example, a preferential matching relationship between the text content "children" and the location "Cuihua kindergarten" is established, or a preferential matching relationship between the text content "school" and the location "Cuihua kindergarten" is established, or a preferential matching relationship between the text content "children's school" and the location "Cuihua kindergarten" is established.

For example, as shown in FIG. 4(c)-1 and FIG. 4(c)-2, in a model inference phase, when it is detected that the user sends a speech navigation instruction "dao hang qu xiao peng you de xue xiao", because a preferential matching relationship between the speech information "xiao peng you de xue xiao" and the text content "children's school" has been established in the trained device-side ASR model, the trained device-side ASR model may directly convert the speech navigation instruction into text content: navigate to children's school. A device-side NLU module may analyze an intent and slot information of the user, to obtain that the intent of the user is "navigate to destination" and the slot information is "destination=children's school". The device-side NLU module may send the intent and slot information of the user to a navigation application. The offline POI search module first performs searching on the device-side POI data set to obtain that the remark information corresponding to "Cuihua kindergarten" is "children's school"; and then performs searching on the general POI data set to obtain a location "children's home" that has similar pronunciation with "children's school". "Cuihua kindergarten" and "children's home" may be sequentially displayed in the search result.

For example, in a model training phase, when it is detected that the user adds "B school" to favorites by using the map app and adds remark information "children's school" to "B school", a name, a position, coordinates, a category, and the remark information of "B school" may be added to the device-side POI data set. The vehicle may train the device-side ASR model based on the data in the device-side POI data set. For example, the vehicle may establish, in the device-side ASR model, a preferential matching relationship between at least partial information in speech information "B school" and text content "B school", and establish a preferential matching relationship between speech information "children's school" and text content "children's school".

For example, in a model inference phase, when it is detected that the user sends a speech navigation instruction "show me the path to children's school", because a preferential matching relationship between the speech information "children's school" and text information "children's school" has been established in the trained device-side ASR model, the trained device-side ASR model may directly convert the speech navigation instruction into text content: show me the path to children's school. A device-side NLU module may analyze an intent and slot information of the user, to obtain that the intent of the user is "navigate to destination" and the slot information is "destination=children's school". The device-side NLU module may send the intent and slot information of the user to a navigation application. The offline POI search module first performs searching on the device-side POI data set to obtain that the remark information corresponding to "B school" is "children's school"; and then performs searching on the general POI data set to obtain a location "children's home" that has similar pronunciation with "children's school". "B school" and "children's home" may be sequentially displayed in the search result.

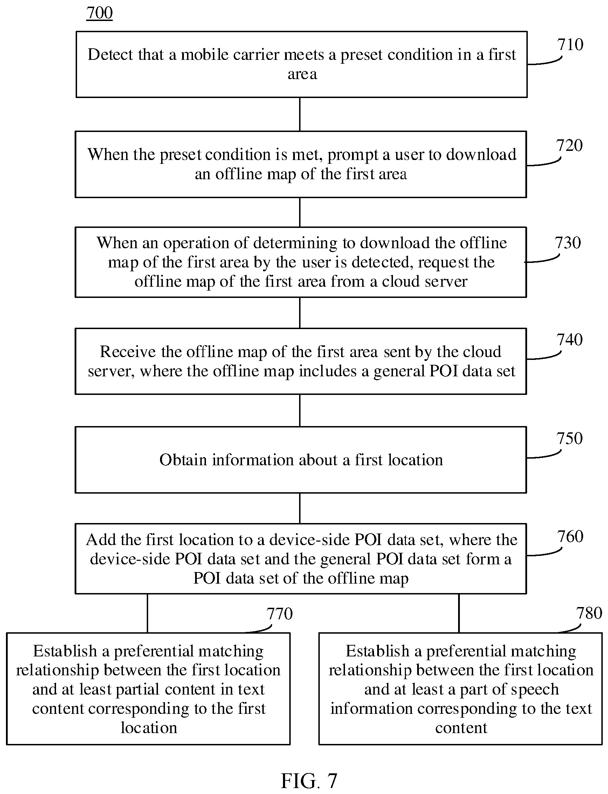

FIG. 7 is a schematic flowchart of an offline navigation method 700 for a mobile carrier according to an embodiment of this application. The method 700 may be performed by the mobile carrier 100, or the method 700 may be performed by the computing platform 120, or the method 700 may be performed by a system including the computing platform 120 and the display apparatus 130, or the method 700 may be performed by a SoC on the computing platform 120, or the method 700 may be performed by a processor, a chip, or a circuit on the computing platform 120. The method 700 includes the following steps.

S710: Detect that a mobile carrier meets a preset condition in a first area.

For example, the preset condition includes that stay duration of the mobile carrier in the first area is greater than or equal to preset duration (for example, 48 hours).

For example, the preset condition further includes that the vehicle is currently in a state in which an account is logged in, and/or the vehicle is currently in a parking gear (P gear).

S720: When the preset condition is met, prompt a user to download an offline map of the first area.

For example, the mobile carrier may control a display apparatus to display prompt information "It is detected that you have stayed in city A for 48 hours. Do you want to download an offline map of city 1?". Alternatively, the mobile carrier may control a sound-making apparatus to send speech information "It is detected that you have stayed in city A for 48 hours. Do you want to download an offline map of city 1?".

730: When an operation of determining to download the offline map of the first area by the user is detected, request the offline map of the first area from a cloud server.

For example, when it is detected that the user sends a speech instruction "download the offline map of city 1", the mobile carrier may request the offline map of the first area from the cloud server.

S740: Receive the offline map of the first area sent by the cloud server, where the offline map includes a general POI data set.

S750: Obtain information about a first location.

S760: Add the first location to a device-side POI data set, where the device-side POI data set and the general POI data set form a POI data set of the offline map.

The first location is added to the device-side POI data set, so that a range of the POI data set of the offline map can be wider. This helps extend a POI search capability of the offline map.

For S750, refer to the description in S620. Details are not described herein again.

There is no actual sequence between S750 and 760 and S710 to S740. For example, after the mobile carrier obtains the offline map of the first area from the cloud server, if the mobile carrier obtains the information about the first location and the first location is not in the general POI data set included in the offline map of the first area, the first location may be added to the device-side POI data set. The device-side POI data set and the general POI data set form the POI data set of the offline map.

For another example, S750 and S760 may alternatively be performed before S710. Before the mobile carrier obtains the offline map of the first area from the cloud server, if the mobile carrier obtains the information about the first location, the first location may be added to the device-side POI data set. After obtaining the offline map of the first area from the cloud server, the mobile carrier may perform determining on locations in the device-side POI data set and the general POI data set. If the first location in the device-side POI data set is not in the general POI data set, the first location may continue to be retained in the device-side POI data set. If a second location in the device-side POI data set is already in the general POI data set, the second location may be removed from the device-side POI data set.

S770: Establish a preferential matching relationship between the first location and at least partial content in text content corresponding to the first location.

S780: Establish a preferential matching relationship between the first location and at least a part of speech information corresponding to the text content.

For processes of S770 and S780, refer to descriptions in the foregoing embodiment. Details are not described herein again.

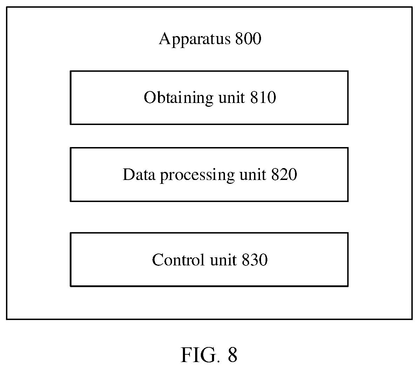

FIG. 8 is a block diagram of an offline navigation apparatus 800 for a mobile carrier according to an embodiment of this application. As shown in FIG. 8, the apparatus 800 includes: an obtaining unit 810, configured to obtain an offline map, where the offline map includes information about a location set, and the obtaining unit 810 is further configured to obtain information about a first location; a data processing unit 820, configured to add the first location to the location set when the first location is not in the location set, where the obtaining unit 810 is further configured to obtain a first navigation instruction when the mobile carrier is in an offline state, and the first navigation instruction includes at least partial content in text content corresponding to the first location, or the first navigation instruction includes at least partial information in speech information corresponding to the text content; and a control unit 830, configured to control, according to the first navigation instruction, a display apparatus to display a first search result by using the offline map, where the first search result includes the first location.

Optionally, the apparatus 800 further includes: a matching relationship establishment unit, configured to establish a first matching relationship between the first location and the at least partial content and/or the at least partial information; and the control unit 830, configured to control, according to the first navigation instruction and based on the first matching relationship, the display apparatus to display the first search result by using the offline map, where the first search result includes the first location and a second location, and a priority of the first location is higher than a priority of the second location.

Optionally, the matching relationship establishment unit is further configured to establish a second matching relationship between the first location and at least partial content in remark information and/or at least partial information in speech information corresponding to the remark information; the obtaining unit 810 is further configured to obtain a second navigation instruction when the mobile carrier is in the offline state, where the second navigation instruction includes the at least partial content in the remark information, or the second navigation instruction includes the at least partial information in the speech information corresponding to the remark information; and the control unit 830 is further configured to control, according to the second navigation instruction and based on the second matching relationship, the display apparatus to display a second search result by using the offline map, where the second search result includes the first location and a third location, and the priority of the first location is higher than a priority of the third location.

Optionally, the apparatus 800 further includes a detection unit, and the obtaining unit 810 is configured to obtain the information about the first location when the detection unit detects an input of searching for the first location by a user by using an application.

Optionally, the obtaining unit 810 is configured to obtain the information about the first location when the detection unit detects an input of searching for the first location by the user by using a map application.

Optionally, the obtaining unit 810 is configured to obtain the information about the first location when the detection unit detects an input of navigating to the first location by the user by using the map application.

Optionally, the obtaining unit 810 is configured to receive the information about the first location sent by the mobile terminal.

Optionally, the control unit 830 is further configured to: when stay duration of the mobile carrier in a first area is greater than or equal to preset duration, control a prompt apparatus to prompt the user to download the offline map, where the offline map includes a map of the first area.

Optionally, the apparatus 800 further includes a determining unit, configured to: before the control unit controls the prompt apparatus to prompt the user to download the offline map, determine that the mobile carrier is in a parked state.

For example, the obtaining unit 810 may be the computing platform in FIG. 1, or a processing circuit, a processor, or a controller on the computing platform. For example, the obtaining unit 810 is a processor 121 on the computing platform. The processor 121 may obtain information about the offline map and the information about the first location. For another example, the obtaining unit 810 may further obtain a navigation instruction sent by the user.

For another example, the data processing unit 820 may be the computing platform in FIG. 1, or a processing circuit, a processor, or a controller on the computing platform. For example, the data processing unit 820 is a processor 122 on the computing platform. The processor 122 may perform determining on locations in the location set included in the offline map obtained by the processor 121 and the first location. If the first location is not in the location set, the first location may be added to the location set.

For another example, the matching relationship establishment unit may be the computing platform in FIG. 1, or a processing circuit, a processor, or a controller on the computing platform. For example, the matching relationship establishment unit is a processor 123 on the computing platform. The processor 123 may establish a preferential matching relationship between the first location and the at least partial content in the text content corresponding to the first location, and/or establish a preferential matching relationship between the first location and the at least partial information in the speech information corresponding to the text content.

For another example, the control unit 830 may be the computing platform in FIG. 1, or a processing circuit, a processor, or a controller on the computing platform. For example, the control unit 830 is a processor 124 on the computing platform. The processor 124 may control, according to the navigation instruction obtained by the processor 121, the display apparatus to display, by using the offline map, a search result including the first location. Alternatively, the processor 124 may control, according to the navigation instruction obtained by the processor 121 and based on a matching relationship established by the processor 123, the display apparatus to preferentially display the information about the first location by using the offline map.

Functions implemented by the obtaining unit 810, the data processing unit 820, the matching relationship establishment unit, and the control unit 830 may be implemented by different processors, or some functions may be implemented by a same processor, or all functions may be implemented by a same processor. This is not limited in embodiments of this application.

It should be understood that division of the units in the foregoing apparatus is merely logical function division. During actual implementation, all or some of the units may be integrated into one physical entity, or may be physically separated. In addition, the units of the apparatus may be implemented in a form of software invoked by a processor. For example, the apparatus includes a processor, the processor is connected to a memory, the memory stores instructions, and the processor invokes the instructions stored in the memory, to implement any one of the foregoing methods or implement functions of each unit of the apparatus. The processor is, for example, a general-purpose processor like a CPU or a microprocessor. The memory is a memory inside the apparatus or a memory outside the apparatus. Alternatively, the units of the apparatus may be implemented in a form of a hardware circuit, and functions of some or all of the units may be implemented by designing the hardware circuit. The hardware circuit may be understood as one or more processors. For example, in an implementation, the hardware circuit is an ASIC, and functions of some or all of the foregoing units are implemented by designing a logical relationship between elements in the circuit. For another example, in another implementation, the hardware circuit may be implemented by using a PLD. An FPGA is used as an example. The hardware circuit may include a large quantity of logic gate circuits, and a connection relationship between the logic gate circuits is configured by using a configuration file, to implement functions of some or all of the foregoing units. All units of the foregoing apparatus may be implemented in a form of software invoked by a processor; or all units may be implemented in a form of a hardware circuit; or some units may be implemented in a form of software invoked by a processor, and a remaining part may be implemented in a form of a hardware circuit.

In embodiments of this application, the processor is a circuit having a signal processing capability. In an implementation, the processor may be a circuit having a capability of instruction reading and running, for example, a CPU, a microprocessor, a GPU, or a DSP. In another implementation, the processor may implement a specific function based on a logical relationship of a hardware circuit. The logical relationship of the hardware circuit is fixed or reconfigurable. For example, the processor is a hardware circuit implemented by an ASIC or a PLD, for example, an FPGA. In a reconfigurable hardware circuit, a process in which the processor loads a configuration document to implement hardware circuit configuration may be understood as a process in which the processor loads instructions to implement functions of a part or all of the units. In addition, the processor may be a hardware circuit designed for artificial intelligence, and may be understood as an ASIC, for example, an NPU, a TPU, or a DPU.

It can be learned that each unit of the foregoing apparatus may be one or more processors (or processing circuits) configured to implement the foregoing method, for example, a CPU, a GPU, an NPU, a TPU, a DPU, a microprocessor, a DSP, an ASIC, an FPGA, or a combination of at least two of these processor forms.

In addition, all or some of the units of the foregoing apparatus may be integrated, or may be implemented independently. In an implementation, these units are integrated and implemented in a form of a SoC. The SoC may include at least one processor, configured to implement any one of the foregoing methods or implement functions of each unit of the apparatus. Types of the at least one processor may be different, for example, include a CPU and an FPGA, a CPU and an artificial intelligence processor, a CPU and a GPU, and the like.

An embodiment of this application further provides an apparatus. The apparatus includes a processing unit and a storage unit. The storage unit is configured to store instructions, and the processing unit executes the instructions stored in the storage unit, so that the apparatus performs the methods or steps performed in the foregoing embodiments.

Optionally, if the apparatus is located in a mobile carrier, the processing unit may be the processors 121 to 12n shown in FIG. 1.

An embodiment of this application further provides a control system. The control system may include a computing platform and a display apparatus. The computing platform may include the offline navigation apparatus 800.

An embodiment of this application further provides a mobile carrier. The mobile carrier may include the offline navigation apparatus 800 or the control system.

Optionally, the mobile carrier may be a vehicle.

An embodiment of this application further provides a computer program product. The computer program product includes computer program code, and when the computer program code is run on a computer, the computer is enabled to perform the methods in the foregoing embodiments.

An embodiment of this application further provides a computer-readable medium. The computer-readable medium stores program code, and when the computer program code is run on a computer, the computer is enabled to perform the methods in the foregoing embodiments.

An embodiment of this application further provides a chip. The chip includes a circuit, and the circuit is configured to perform the methods in the foregoing embodiments.

During implementation, steps in the foregoing methods may be implemented by using a hardware integrated logic circuit in the processor, or by using instructions in a form of software. The method disclosed with reference to embodiments of this application may be directly performed by a hardware processor, or may be performed by using a combination of hardware in the processor and a software module. The software module may be located in a mature storage medium in the art, like a random access memory, a flash memory, a read-only memory, a programmable read-only memory, an electrically erasable programmable memory, or a register. The storage medium is located in the memory, and the processor reads information in the memory and completes the steps of the foregoing methods in combination with hardware of the processor. To avoid repetition, details are not described herein again.

It should be understood that in embodiments of this application, the memory may include a read-only memory and a random access memory, and provide instructions and data to the processor.

It should be further understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for indicating a computing device (which may be a personal computer, a server, or a network device) to perform all or a part of the steps of the methods described in embodiments of this application. The foregoing storage medium includes any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An offline navigation method for a mobile carrier, comprising:
obtaining an offline map, wherein the offline map comprises information about a location set;
obtaining information about a first location, wherein the first location is a location of interest to a user;
adding the first location to the location set when the first location is not in the location set;
obtaining a first navigation instruction when the mobile carrier is in an offline state, wherein the first navigation instruction comprises at least partial content in text content corresponding to the first location, or the first navigation instruction comprises at least partial information in speech information corresponding to the text content; and
controlling, according to the first navigation instruction, a display apparatus to display a first search result by using the offline map, wherein the first search result comprises the first location.

2. The method according to claim 1, wherein the method further comprises:
establishing a first matching relationship between the first location and the at least partial content in the text content and/or the at least partial information in the speech information corresponding to the text content; and
the controlling, according to the first navigation instruction, a display apparatus to display a first search result by using the offline map comprises:
controlling, according to the first navigation instruction and based on the first matching relationship, the display apparatus to display the first search result by using the offline map, wherein the first search result comprises the first location and a second location, wherein
a priority of the first location is higher than a priority of the second location.

3. The method according to claim 2, wherein the first navigation instruction comprises the at least partial information, and the controlling, according to the first navigation instruction and based on the first matching relationship, the display apparatus to display the first search result by using the offline map comprises:
recognizing the at least partial information as first text content according to the first navigation instruction and based on the first matching relationship, wherein the first text content comprises the at least partial content in the text content corresponding to the first location; and
controlling the display apparatus to display the first text content by using a text input box of the offline map, and controlling the display apparatus to display the first search result by using the offline map.

4. The method according to any one of claims 1 to 3, wherein the information about the first location comprises remark information of the first location, and the method further comprises:
establishing a second matching relationship between the first location and at least partial content in the remark information and/or at least partial information in speech information corresponding to the remark information;
obtaining a second navigation instruction when the mobile carrier is in the offline state, wherein the second navigation instruction comprises the at least partial content in the remark information, or the second navigation instruction comprises the at least partial information in the speech information corresponding to the remark information; and
controlling, according to the second navigation instruction and based on the second matching relationship, the display apparatus to display a second search result by using the offline map, wherein the second search result comprises the first location and a third location, wherein
the priority of the first location is higher than a priority of the third location.

5. The method according to any one of claims 1 to 4, wherein the obtaining information about a first location comprises:
obtaining the information about the first location when an input of searching for the first location by the user by using an application is detected.

6. The method according to claim 5, wherein the obtaining the information about the first location when an input of searching for the first location by the user by using an application is detected comprises:
obtaining the information about the first location when an input of searching for the first location by the user by using a map application is detected.

7. The method according to claim 6, wherein the obtaining the information about the first location when an input of searching for the first location by the user by using a map application is detected comprises:
obtaining the information about the first location when an input of navigating to the first location by the user by using the map application is detected.

8. The method according to any one of claims 1 to 4, wherein the obtaining information about a first location comprises:
receiving the information about the first location sent by a mobile terminal.

9. The method according to any one of claims 1 to 8, wherein the method further comprises:
when stay duration of the mobile carrier in a first area is greater than or equal to preset duration, controlling a prompt apparatus to prompt the user to download the offline map, wherein the offline map comprises a map of the first area.

10. The method according to claim 9, wherein before the controlling a prompt apparatus to prompt the user to download the offline map, the method further comprises:
determining that the mobile carrier is in a parked state.

11. An offline navigation apparatus for a mobile carrier, comprising:
an obtaining unit, configured to obtain an offline map, wherein the offline map comprises information about a location set, wherein
the obtaining unit is further configured to obtain information about a first location, wherein the first location is a location of interest to a user;
a data processing unit, configured to add the first location to the location set when the first location is not in the location set, wherein
the obtaining unit is further configured to obtain a first navigation instruction when the mobile carrier is in an offline state, wherein the first navigation instruction comprises at least partial content in text content corresponding to the first location, or the first navigation instruction comprises at least partial information in speech information corresponding to the text content; and
a control unit, configured to control, according to the first navigation instruction, a display apparatus to display a first search result by using the offline map, wherein the first search result comprises the first location.

12. The apparatus according to claim 11, wherein the apparatus further comprises:
a matching relationship establishment unit, configured to establish a first matching relationship between the first location and the at least partial content in the text content corresponding to the first location and/or the at least partial information in the speech information corresponding to the text content; and
the control unit, configured to control, according to the first navigation instruction and based on the first matching relationship, the display apparatus to display the first search result by using the offline map, wherein the first search result comprises the first location and a second location, wherein
a priority of the first location is higher than a priority of the second location.

13. The apparatus according to claim 12, wherein the first navigation instruction comprises the at least partial information, and the apparatus further comprises:
a speech recognition unit, configured to recognize the at least partial information as first text content according to the first navigation instruction and based on the first matching relationship, wherein the first text content comprises the at least partial content in the text content corresponding to the first location; and
the control unit, configured to: control the display apparatus to display the first text content by using a text input box of the offline map, and control the display apparatus to display the first search result by using the offline map.

14. The apparatus according to any one of claims 11 to 13, wherein the information about the first location comprises remark information of the first location;
the matching relationship establishment unit is further configured to establish a second matching relationship between the first location and at least partial content in the remark information and/or at least partial information in speech information corresponding to the remark information;
the obtaining unit is further configured to obtain a second navigation instruction when the mobile carrier is in the offline state, wherein the second navigation instruction comprises the at least partial content in the remark information, or the second navigation instruction comprises the at least partial information in the speech information corresponding to the remark information;
the control unit is further configured to control, according to the second navigation instruction and based on the second matching relationship, the display apparatus to display a second search result by using the offline map, wherein the second search result comprises the first location and a third location; and
the priority of the first location is higher than a priority of the third location.

15. The apparatus according to any one of claims 11 to 14, wherein the apparatus further comprises a detection unit, and the obtaining unit is configured to:
obtain the information about the first location when the detection unit detects an input of searching for the first location by the user by using an application.

16. The apparatus according to claim 15, wherein the obtaining unit is configured to:
obtain the information about the first location when the detection unit detects an input of searching for the first location by the user by using a map application.

17. The apparatus according to claim 16, wherein the obtaining unit is configured to:
obtain the information about the first location when the detection unit detects an input of navigating to the first location by the user by using the map application.

18. The apparatus according to any one of claims 11 to 14, wherein the obtaining unit is configured to:
receive the information about the first location sent by a mobile terminal.

19. The apparatus according to any one of claims 11 to 18, wherein
the control unit is further configured to: when stay duration of the mobile carrier in a first area is greater than or equal to preset duration, control a prompt apparatus to prompt the user to download the offline map, wherein the offline map comprises a map of the first area.

20. The apparatus according to claim 19, wherein the apparatus further comprises:
a determining unit, configured to: before the control unit controls the prompt apparatus to prompt the user to download the offline map, determine that the mobile carrier is in a parked state.

21. An offline navigation apparatus for a mobile carrier, comprising:
a memory, configured to store a computer program; and
a processor, configured to execute the computer program stored in the memory, so that the apparatus performs the method according to any one of claims 1 to 10.

22. A control system, comprising a display apparatus and a computing platform, wherein the computing platform comprises the apparatus according to any one of claims 11 to 21.

23. A mobile carrier, comprising the apparatus according to any one of claims 11 to 21, or comprising the control system according to claim 22.

24. The mobile carrier according to claim 23, wherein the mobile carrier is a vehicle.

25. A computer-readable storage medium, wherein the computer-readable storage medium stores a computer program, and when the computer program is executed by a computer, the method according to any one of claims 1 to 10 is implemented.

26. A chip, wherein the chip comprises a processor and a data interface, and the processor reads, through the data interface, instructions stored in a memory, to perform the method according to any one of claims 1 to 10.
